(19) **Europäisches Patentamt**

**European Patent Office**

**Office européen des brevets**

(11) **EP 0 880 821 B1**

(12) **EUROPEAN PATENT SPECIFICATION**

(45) Date of publication and mention
of the grant of the patent:
**17.12.2003 Bulletin 2003/51**

(51) Int Cl.⁷: **G06F 17/00**, H03F 1/26,
G05B 23/02, G06G 7/12,
H04B 15/00, G01T 1/17,
G01R 19/04

(21) Application number: **96928138.5**

(22) Date of filing: **09.08.1996**

(86) International application number:
**PCT/US96/13082**

(87) International publication number:
**WO 9700/7591 (27.02.1997 Gazette 1997/10)**

(54) **METHOD AND APPARATUS FOR DIGITALLY BASED HIGH SPEED X-RAY SPECTROMETER**

VERFAHREN UND VORRICHTUNG FÜR DIGITALES
HOCHGESCHWINDIGKEITS-RÖNTGENSPEKTROMETER

PROCEDE ET APPAREIL DESTINES A UN SPECTROMETRE A RAYONS X, GRANDE VITESSE,
NUMERISE

(84) Designated Contracting States:
**DE FI FR GB IT**

(30) Priority: **14.08.1995 US 2266**
**02.08.1996 US 695062**
**02.08.1996 US 695063**
**02.08.1996 US 702327**
**02.08.1996 US 730916**

(43) Date of publication of application:
**02.12.1998 Bulletin 1998/49**

(73) Proprietor: **Warburton, William K.**
**Menlo Park, CA 94025 (US)**

(72) Inventors:
• **WARBURTON, William, K.**
**Menlo Park, CA 94025 (US)**
• **ZHOU, Carl**
**Fremont, CA 94555 (US)**
• **HUBBARD, Bradley**
**Santa Cruz, CA 95060 (US)**

(74) Representative: **Bucks, Teresa Anne et al**
**BOULT WADE TENNANT,**
**Verulam Gardens**
**70 Gray's Inn Road**
**London WC1X 8BT (GB)**

(56) References cited:
EP-A- 0 396 464      US-A- 3 872 287
US-A- 4 658 216      US-A- 5 005 146
US-A- 5 304 808      US-A- 5 349 193

• LAKATOS T: "ADAPTIVE DIGITAL SIGNAL
PROCESSING FOR X-RAY SPECTROMETRY"
NUCLEAR INSTRUMENTS & METHODS IN
PHYSICS RESEARCH, SECTION - B: BEAM
INTERACTIONS WITH MATERIALS AND
ATOMS,NL,NORTH-HOLLAND PUBLISHING
COMPANY. AMSTERDAM, vol. B47, no. 3, May
1990 (1990-05), page 307-310 XP000125987
ISSN: 0168-583X
• WESTMEIER W ET AL: "PC-BASED
HIGH-PRECISION NUCLEAR SPECTROMETRY"
NUCLEAR INSTRUMENTS & METHODS IN
PHYSICS RESEARCH, SECTION - A:
ACCELERATORS, SPECTROMETERS,
DETECTORS AND ASSOCIATED
EQUIPMENT,NL,NORTH-HOLLAND
PUBLISHING COMPANY. AMSTERDAM, vol.
A286, no. 3, January 1990 (1990-01), page
439-442 XP000095961 ISSN: 0168-9002

- CHRIEN R E ET AL: "NOISE AND PILEUP SUPPRESSION BY DIGITAL SIGNAL PROCESSING" NUCLEAR INSTRUMENTS & METHODS IN PHYSICS RESEARCH, SECTION - A: ACCELERATORS, SPECTROMETERS, DETECTORS AND ASSOCIATED EQUIPMENT,NL,NORTH-HOLLAND PUBLISHING COMPANY. AMSTERDAM, vol. A249, no. 2/03, 1986, page 421-425 XP000717307 ISSN: 0168-9002
- IEEE TRANSACTIONS ON NUCLEAR SCIENCE, Vol. 40, No. 4, August 1993, TAKAHASHI et al., "A New Pulse Height Analysis System Based on Fast ADC Digitizing Technique", pages 626-629.
- REV. SCI. INSTRUM., Vol. 66, No. 2, February 1995, R. FARROW et al., "X-ray Signal Processing Electronics for Solid State Detectors", pages 2307-2309.
- IEEE TRANSACTION ON NUCLEAR SCIENCE, Vol. 42, No. 4, August 1995, V.T. JORDANOV et al., "Digital Pulse-Shape Analyzer Based on Fast Sampling of an Integrated Charge Pulse", pages 683-687.
- IEEE TRANSACTIONS ON NUCLEAR SCIENCE, Vol. 41, No. 4, August 1994, A. GEORGIEV et al., "An Analog-to-Digital Conversion Based on a Moving Window Deconvolution", pages 1116-1124.
- IEEE TRANSACTIONS ON NUCLEAR SCIENCE, Vol. 41, No. 5, October 1994, M.N. AL-HADDAD et al., "Development and Testing of a Flash Analog-to-Digital Converter Based System for Pulse Shape Discrimination of Nuclear Radiation Pulses", pages 1765-1769.

**Description**

**BACKGROUND OF THE INVENTION**

The present invention relates generally to systems for digitally processing the pulses generated in detector systems in response to absorbed radiation and, more particularly, to processing such pulses in low cost, high resolution, high rate spectrometers for x-rays or gamma rays.

There is a need, particularly in synchrotron radiation research, for low cost, high speed arrays of x-ray spectrometers. In order to optimize data acquisition, such spectrometers should have good energy resolution, high counting rate capability with pileup rejection, and low enough cost so that arrays of 30 or more detectors can be contemplated. Full multichannel analysis (MCA) capability would extend the range of application considerably. Full computer control of all spectrometer functions is also very important since otherwise the setup and calibration of the detector array becomes very burdensome as the array size becomes large. The spectrometer's physical size would be preferably compact as well.

Present electronics do not meet these goals, costing about $6,000 per detector to implement without multichannel analysis, and filling a full rack for a 13 element detector. Thus 30 element detectors are impractical to instrument and 100 element arrays are essentially impossible. Multichannel analysis is rarely employed with detector arrays because low cost MCAs are not fast enough and high speed MCAs are too expensive for most applications. Pileup inspection is sporadically implemented, but is typically effective only for energies above 8 kev. A few modules allow partial computer control of spectrometer functions, but typically cost about twice as much as modules without computer interfaces. This is significant because while tuning a single spectrometer channel requires only a few minutes, the effort must be multiplied by the number of elements in an array and becomes burdensome for arrays of 10 elements or more.

For these synchrotron applications, and many others as well, it would thus be advantageous to have a low cost, small volume spectrometry device capable of providing full energy analysis with good energy resolution at high count rates and be further capable of being interfaced to a computer system so that necessary tuning operations could be accomplished automatically by an appropriate program.

A real-time fully digital signal processing and analysing system for high count rate high resolution spectrometry is disclosed in an article by T LAKATOS entitled "Adaptive Digital Signal Processing for x-ray spectrometry" which appeared in "Nuclear Instruments and Methods in Physics Research", Section B: Beam interactions with materials and atoms, Netherlands (North Holland Publishing Company) (Volume B47, No. 3 May 1990, Page 307-310). The author of this article discloses a real-time digital signal processing method and system for high resolution spectrometry with adaptive signal filtering to provide the highest through-put rate in such a way that if pile up occurs the signal processor finishes the filtering of the first pulse, and begins the filtering of the second pulse in order to retain all the events, with no loss of counting statistics .

SUMMARY OF THE INVENTION

A first aspect of the present invention is defined in claim 1. A second aspect of the present invention is defined in claim 24. A method and apparatus for processing pulse signals from a detector-preamplifier system and analysing the energy of the x-rays or γ-rays absorbed in the detector are thus provided. In specific embodiments, it is compact, low cost, high speed, performs pileup inspection, has a digital interface so that it can be easily connected to a computer, and can operate effectively with most common preamplifiers.

Digital signal processing techniques to analyse the detector-preamplifier input pulses are employed. Low cost, high speed analog-to-digital converters (ADCs) and digital signal processors (DSPs) are used to meet the desired performance criteria. The energy resolution is the same and the pileup rejection performance exceeds that of state of the art analog spectrometers and complete output spectra are produced at very high count rates which were previously typical only of SCA systems. Digital processing allows overall costs and physical volume to be reduced by factors of about 4 and 10, respectively, compared to commercial analog circuitry. All spectrometry tuning functions are digital implemented and may be handled automatically under external computer control.

For the intended application, high data throughput at low cost is more important than optimum energy resolution. To achieve these goals, the invention carries out the digital pulse processing in two stages. The first stage uses "hardwired" digital combinatorial logic to implement time invariant filtering, while the second stage uses a programmable DSP to adjust and correct the first stage's output, based on time dependent parameters. This division of labor is critical to the invention's success.

In a specific embodiment, the hardwired logic stage avoids the adaptive filtering, cusp-like weighting, or deconvolution schemes typical of the art to date. Such schemes require complex data operations including: multiplication; lookup tables for weighting functions; data set buffering for both time variant processing and interprocess synchronization; and the like. Instead, only a simple shaping filter (preferably trapezoidal) in both a slow and a fast channel, using an algorithm requiring only addition and subtraction is implemented. As commonly practised in the art, the fast channel's output is used for pileup inspection and slow peak capture, while slow channel filtering provides the noise reduction required to achieve good energy resolution. See, for example, the analog spectrometer design of Goulding and Landis, (US Pat. No. 4, 658,216). Processing all pulses identically and eliminating all complex data operations so simplifies the first stage design that it can be readily implements in a single medium sized field programmable gate array (FPGA) and still process over 500,000 counts/second (cps). For comparison, the adaptive digital filtering spectrometer shown by Mott et al. (U.S. Pat. No. 5,349,193) requires a similar sized FPGA simply to implement the state machine required to control data flow.

Used alone, however, such a simple filter, does not produce acceptable spectroscopic performance, compared to existing analog devices, which is why the more complex schemes found in the art have been developed. The present invention therefore applies a second processing stage, using a programmable computer to apply the time variant corrections which are required to achieve competitive performance. Because these corrections are not carried out at the system's sampling speed, which can easily be 10's of mega-Hertz, but only at the average signal pulse rate, which will be 10 to 100 times slower, relatively complex corrections can be implemented using an inexpensive DSP. Moreover, not all possible corrections must be implemented simultaneously. In contrast to hardware solutions, only those corrections required by a particular detector-preamplifier combination are downloaded to the DSP at system startup. In a specific implementation, for instance, the 500,000 cps data rate noted above is processed by only a $40 DSP chip.

Thus the present invention is to distinguished from the two classes of solutions previously devised to digitally process pulses in x and gamma ray spectrometers: the "hard-wired" class where all the computations required to identify pulses in the data stream and extract their amplitudes with time dependent corrections and optimizations are performed using hardwired logic; and the "computer analysis" class where all these operations are performed under software control. The former class includes the devices of Koeman (US Pat. No. 3,872,287), Lakatos et al. (US Pat. No. 5,005,146), Georgiev et al. (IEEE Trans. Nucl. Sci. 41(1994) 1116-1124, Mott et al., Jordanov and Knoll (IEEE. Trans. Nucl. Sci. 42 (1995) 683-685, and Farrow et al. (Rev. Sci. Instr. 66 (1995) 2307-2309. Commercialization of the Georgiev, Mott and Jordanov devices has been attempted by the companies Target, Inc., Princeton Gamma-Tech, Inc., and Amptek, Inc., respectively. Examples of the latter class have been reported by Takahashi et al. (IEEE Trans. Nucl. Set. 40 (1993) 626-629, Al-Haddad et al. (IEEE Trans. Nucl. Sci. 41(1994) 1765-1769. The latter class has not been commercialized to date, presumably due to the extreme cost of a processor fast enough to process useful data rates. The present invention thus defines a new, "hybrid" class, which distributes digital filtering between a hardwired preprocessor and a programmed signal corrector.

The corrective use of the DSP in the second stage of the spectroscopic filtering process should not be confused with the MCA step used to produce a spectrum of the photon energies seen by the detector. While the sorting and binning of the filtered pulse amplitudes is also commonly handled by a dedicated digital computer, these functions are not conceptually a part of the filtering process. Therefore, although many systems found in the art may have a similar physical topology, with a DSP providing MCA following a digital filtering stage, the innovative use of the DSP in the present invention, as described both above and in the specification below, is entirely different.

In a specific implementation, a single DSP is actually used to implement four logically separate functions: the inventive filtering functions; the MCA function; controlling the analog conditioning front end; and handling data input/output to a system control computer.

In this same specific implementation, the invention is used with an analog signal conditioning (ASC) front end to remove ramp-like components from the input data stream in order to reduce the number of bits of accuracy required in the system's ADC. This ASC's input control parameters are set digitally by the DSP and adjusted as required to maintain the conditioned signal within the ADC's input range. After digitization, the pulse stream is processed by the hardwired logic unit discussed above, which detects pulses, implements triangular filtering, and performs pileup inspection. It further captures both good peak and baseline values which it passes to the DSP for further processing. The DSP performs the computations and corrections which convert peak values into accurate energy values and then bins the results to produce MCA spectra. Although the ASC's action introduces distortions into the hardwired filtering procedure, the DSP can make appropriate corrections using both its values of the ASC control parameters and unfiltered signal values as appropriate. By capturing baseline values between peaks, the DSP can also correct the peak heights for less systematic variations which occur for a variety of reasons.

In the invention, the hardwired digital processing stage is designated as the FiPPI because it implements filtering, peak detection, and pileup inspection. The FiPPI processes every data sample, but performs only the small set of filtering and inspection functions which are required to detect and accurately capture the local amplitudes of x-ray pulses in the input data stream. More complex DSP computations are required to process these captured peak amplitudes to produce accurate x-ray energy values, but are only executed as often as actual events are detected. This division is beneficial because it minimizes both the amount of expensive fast logic required and the speed (and hence cost) of the DSP required. The result is lower cost and higher performance than if either approach were used singly.

The FiPPI functions which occur in one or another specific implementation comprise a decimator, a slow trapezoidal filter, a fast trapezoidal filter, a peak detector, a pileup checker, an output buffer, and an input count rate (ICR) counter. The FiPPI operation is controlled by several digital parameters which are loaded into the FiPPI before the spectrometer system commences operation.

The decimate by N function breaks up the input from the ADC into successive blocks of N values and outputs the average value of each block at 1/N th the frequency of the input data stream. The adjustable parameter N is a power of 2, taking the values 1, 2, 4, 8, etc. The decimator's primary function is to reduce the amount of First-In-First-out (FIFO) memory required to implement long filtering times in the FiPPI's slow filter.

Both the slow and fast filters are symmetrical trapezoids whose peaking times $\tau_p$ and flattop lengths $\tau_g$ are externally loaded parameters. The trapezoid's peak values constitute measurements of the detected x-ray's energies. These functions are formed by a running average of the difference of two delayed offset differences, which are implemented using FIFO functions. The fast filter is much shorter than the slow filter and normally runs at full clock speed. The slow filter works with the decimator output at 1/N clock speed and can have peaking times of several microseconds or more using FIFOs which are only 32 words deep.

A peak detection circuit inspects the fast filter's output for signal pulses by looking for M or more consecutive values above some threshold level T and, finding such a set of values, captures the arrival time of the maximum signal value within the set, which is thereafter defined as the associated signal pulse's arrival time. The externally loaded parameters T and M may be adjusted to optimize sensitivity to low signal levels while maintaining adequate immunity to triggering by noise.

The pileup inspector assures that the slow filter trapezoids are sampled in the middle of their flattops and that this sampling occurs only for "good peaks." A good peak results from a pulse which is separated from both its predecessor and successor by acceptable time intervals.

Pileup inspection comprises several tests. Two of these are for "fast pileup" pulses, which are too close together to resolve as separate fast filter output peaks. Because a pair of piled-up fast pulses separated by time d extends the fast filter's single pulse output duration D to D + d, a first fast pileup test compares fast pulse widths at a threshold T to a parameter W, which is set to a value slightly longer than D.

Whereas the first fast pileup test compares the fast peak's width at threshold to a test value, a second fast pileup test compares its width at half amplitude to a test value set to be slightly greater than the half width of an ideal fast pulse. This test is pulse amplitude independent, and, while more complex to implement, has increased accuracy for very low amplitude fast pulses which may not exceed the threshold by very much and whose durations above a fixed amplitude threshold are therefore strongly amplitude dependent.

Pileup in the slow channel is inspected using a counter which is reset each time a fast pulse is detected. If this counter reaches the value *S* of an external parameter without being reset, the slow filter's output value is captured to an output buffer at that instant, as is the FiPPI's unfiltered input value. If the counter continues on to reach the value N of a second external parameter, then this pulse has no trailing edge pileup. If a stored flag value shows that it also has no leading edge pileup, then the peak value is "good" and a DSP interrupt flag is raised to signal its capture. The value of N is typically equal to $\tau_{sp}$ plus $\tau_{sg}/2$ plus a small margin interval. The value of S is N adjusted for timing offsets.

After a good event value is captured, a second attempt is made to count to N. If successful, this means that the slow filter output has returned to its baseline level, allowing a value to be captured on DSP request for use in normalization corrections.

The ICR counter is incremented whenever an x-ray is detected, whether it is piled up or not. This value is read and zeroed from time to time, allowing statistics on the fractional pileup rate to be collected and accurate deadtime corrections to be made when quantitatively precise results are required.

In this same embodiment, the DSP is a commercial digital signal processing circuit with all of its functions implemented in software. These functions fall into four general categories: controlling the ASC; correcting captured FiPPI data values to optimize peak height estimation accuracy; performing multichannel analysis to produce spectra; and input/output (I/O) transfers of data and parameters between the system and the outside world. The I/P circuits and software are readily accomplished by one skilled in the art.

The DSP controls the ASC by first setting initial values to the offset and slope DACs in the ASC's ramp generator and then resetting the ramp generator as required. Initial DAC settings are estimated when operation starts. The slope DAC setting estimate is updated from time to time to compensate for variations in the rate of arrival of x-rays to the detector. If the ASC output goes out of the ADC's input range, then the offset DAC is adjusted to restore it.

The DSP retrieves captured peak values from the PiPPI under interrupt control, as noted above, reading FiPPI registers containing this value, the ICR counter value, an unfiltered FiPPI input value, and any other values characterizing the captured event. By design the DSP's interrupt response is less than the minimum slow filter peaking time, so this read does not add any paralyzable dead time to the overall system response. The good peak value is converted into an energy value and such corrections are made as may be required to achieve acceptable accuracy. Then, if it lies within a selected spectral energy range, MCA is performed by binning the result to the spectrum being collected.

From time to time the DSP also captures FiPPI baseline values, which are read the same way as good peak values are. A "set baseline" flag distinguishes the two cases. Baseline values correspond by definition to events with zero energy and are used to establish the FiPPI's zero offset. Baseline statistics can also be collected and used for diagnostic purposes such as monitoring the spectrometer's energy resolution.

If uncorrected, the ASC's subtraction of a ramp waveform from the preamplifier input signal would produce spectral distortions. Because the DSP controls the ASC ramp generator, it can compute the original signal's amplitude, allowing algorithms to be implemented which make the appropriate corrections. The DSP monitors the average baseline value after these corrections and, if it is not zero, subtracts this value from good peak energies to compensate for any residual errors arising from, for example, detector leakage current. The invention will be carried out according to appended independent claims 1 and 21.

A further understanding of the nature and advantages of the present invention may be realized by reference to the remaining portions of the specification and the drawings.

**BRIEF DESCRIPTION OF THE DRAWINGS**

**FIG. 1A** is a circuit schematic of a representative detector-preamplifier system which supplies pulses to the present invention;

**FIG. 1B** is the trace of a typical detector-preamplifier output signal resulting from the absorption of a single x-ray in the detector;

**FIG. 1C** shows a typical output from a continuous discharge detector-preamplifier over the course of multiple x-rays;

**FIG. 1D** shows a typical output from a periodic reset detector-preamplifier over the course of multiple x-rays;

**FIG. 1E** shows three common x-ray pulse arrival patterns after the ASC has removed the reset-ramp portion of the signal;

**FIG. 2** is a block diagram of the invention showing its major parts and its connections to other equipment;

**FIG. 3** is a block diagram of the Analog Signal Conditioning (ASC) and A to D hardware blocks of **FIG. 2**;

**FIG. 4** is a circuit schematic of a representative embodiment of several blocks of **FIG. 3**;

**FIG. 5** is a block diagram of the Hardwired Digital Signal Processor hardware block of **FIG. 2**;

**FIG. 6A** is a circuit schematic of a representative embodiment of the Decimator hardware block of **FIG. 5**;

**FIG. 6B** is a timing diagram illustrating the operation of the circuitry of **FIG. 6A;**

**FIG. 7A** is a circuit schematic of a representative embodiment of the Slow Filter hardware block of **Fig. 5**;

**FIG. 7B** is a timing diagram illustrating the operation of the circuitry of **FIG. 7A**;

**FIG. 8A** is a circuit schematic of a representative embodiment of the FIFO 10 hardware block of **FIG. 6A**;

**FIG. 8B** is a timing diagram illustrating the operation of the circuitry of **FIG. 8A**;

**FIGS. 9A-9G** are a series of timing diagrams demonstrating the relationship between corresponding pulses output by the Fast and Slow Filters of **FIG. 5** and illustrating functions of the Peak Detector and Pileup Checker blocks of **FIG. 5**;

**FIG. 10A** is a circuit schematic of a representative embodiment of the Peak Detector hardware block of **FIG. 5**;

**FIG. 10B** is a timing diagram illustrating the operation of the circuitry of **FIG. 10A;**

**FIG. 11A** is a circuit schematic of a representative embodiment of the Pileup Checker hardware block of **FiG. 5**;

**FIG. 11B** is a timing diagram illustrating the operation of the circuitry of **FIG. 11A;**

**FIG. 12A** is a circuit schematic of a representative embodiment of the Input Count Rate (ICR) Counter hardware block of **FIG. 5;**

**FIG. 12B** is a timing diagram illustrating the operation of the circuitry of **FIG. 12A**;

**FIG. 13** is a circuit schematic of a representative embodiment of the livetime counter hardware block of **FIG. 5**;

**FIG. 14A** is a circuit schematic of a representative embodiment of a Pileup Inspector which measures fast peak widths at their half heights;

**FIG. 14B** is a timing diagram illustrating the operation of the circuitry of **FIG. 14A;**

**FIG. 15** is a **flow** diagram showing the major features of the DSP's control program;

**FIG. 16** is flow diagram of the Data Acquisition Task feature of the DSP's control program; and

**FIGS. 17A-17D** are oscilloscope traces of the output of a specific embodiment of the invention ASC showing the effects of time fluctuations in the arrival rate of x-rays;

**FIG. 18** is a block diagram of a control procedure used to keep the ASC's output within the ADC's input range;

**FIGS. 19A-19B** are sketches showing the need for pulse height correction terms for two types of preamplifiers.

**FIG. 20** is a sketch defining the terms used in the derivation of the pulse height correction term for the continuous discharge type preamplifier.

FIG. 21A is a circuit schematic of an alternate embodiment of the Slow Filter hardware block of **Fig. 4**;

FIG. 21B is a timing diagram illustrating the operation of the circuitry of **FIG. 21A**; and

**FIG. 22** shows an alternate Slow Filter embodiment using analog filtering.

## DESCRIPTION OF SPECIFIC EMBODIMENTS

### 1: System Overview

### 1.1. Preamplifier Input Signals

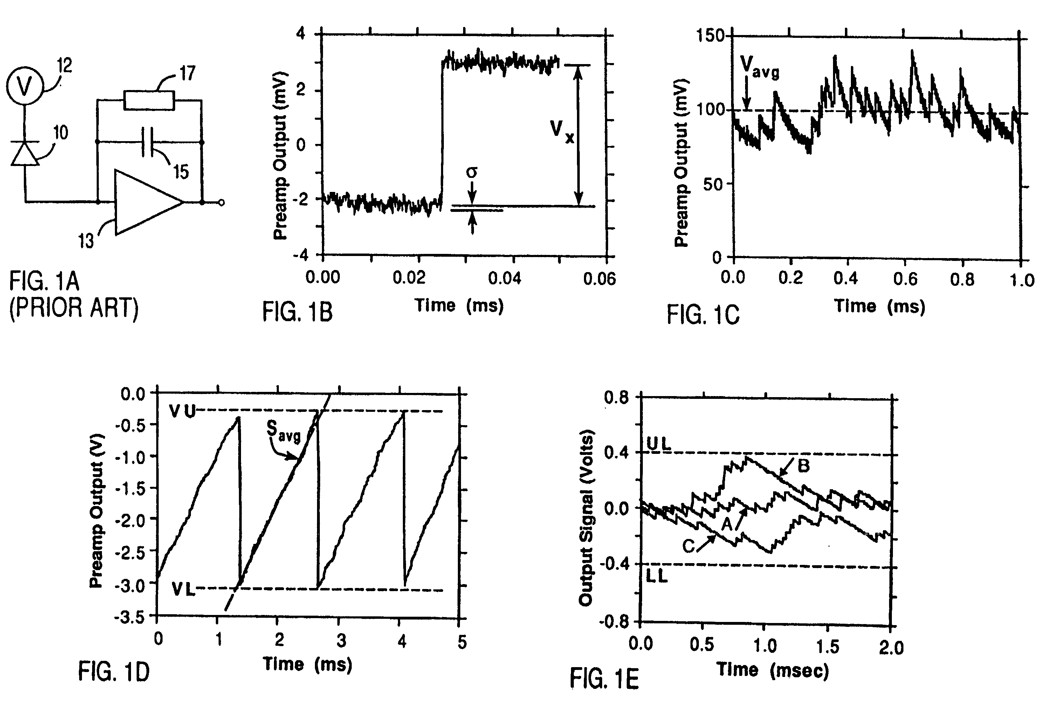

The description of specific embodiments will be clarified by a brief discussion of the electrical pulses, corresponding to detected x-rays, which we will process. **FIG. 1A** shows a common x-ray detector/preamplifier circuit comprising a semiconductor detector diode **10**, a voltage supply **12**, a charge integrating preamplifier **13** with feedback capacitor $C_f$ **15** and feedback element **17**. An x-ray of energy $E_x$ absorbed in diode **10** releases a charge $Q_x$ equal to $E_x/\varepsilon$, where $\varepsilon$ depends on the diode material. $Q_x$ is integrated on $C_f$ **15**, producing an output voltage step $\mathbf{V_x}$ equal to $Q_x/C_f$ or $E_x/(\varepsilon C_f)$, as shown in **FIG. 1B**. The present invention uses digital filtering to accurately estimate $E_x$ by reducing the noise $\sigma$ in the measurement of $\mathbf{V_x}$.

Functionally, there are two basic types of preamplifiers. In the first type, element **17** continuously discharges capacitor **15** (the "CD" case), as by a resistor. **FIG. 1C** shows a typical CD preamplifier output, comprising a series of signal steps (as per **FIG. 1B**) with exponential decays between. The average output voltage, $V_{avg}$, equals the input diode current $I_{in}$ times element **17**'s resistance.

In the second preamplifier type, element **17** is a switch which closes periodically when the output voltage of preamplifier **13** approaches an upper reset value VU and opens again when the preset lower limit V1 is reached. This is the periodic reset ("PR") case **FIG. 1D** shows a typical output, comprising a ramp of voltage steps which rise to VU, where reset occurs, returning the voltage VL, whence the process begins anew. The ramp's average slope $S_{avg}$ equals $I_{in}/C_f$. Typical signal fluctuations about the average slope are shown in **FIG. 1E**.

### 1.2. Dynamic Range and Digitization Rate Issues

ADC selection is critical in implementing a digital spectrometer with both good pileup rejection and good energy resolution. Regarding pileup: at least 20 megasamples/second (MSA) is required to achieve 200 ns pulse pileup inspection times.

Regarding energy resolution: experience shows that to get good energy resolution, the noise range $\sigma$ (see **FIG. 1B**) must be about 4 times the ADC's least significant bit $\Delta V_1$. This sets the gain (volts/bit) of the amplifier stages preceding the ADC:

$$4 \Delta V_1 \leq \sigma \tag{1}$$

Given $\Delta V_1$, the ADC must then have enough bits $N_B$ to fully cover the range 0 to $V_{max}$:

$$N_B = \log(V_{max}/AV_1)/\log(2). \tag{2}$$

A typical value of $N_B$ is 14.

14 bit ADCs operating at 20 MSA exist, but are expensive compared to the cost of the analog electronics which we want to replace. Fast 8 to 10 bit ADCs, however, are inexpensive due to their wide use in digital communications. In the present invention, we reduce the dynamic range of the preamplifier signal sufficiently to allow the use of these cheaper devices. The reduction from 14-15 bits to 8-10 bits is also advantageous both because shorter words require less electronics to process and because they require less power to process at a given data rate.

### 1.3. Functional Organisation

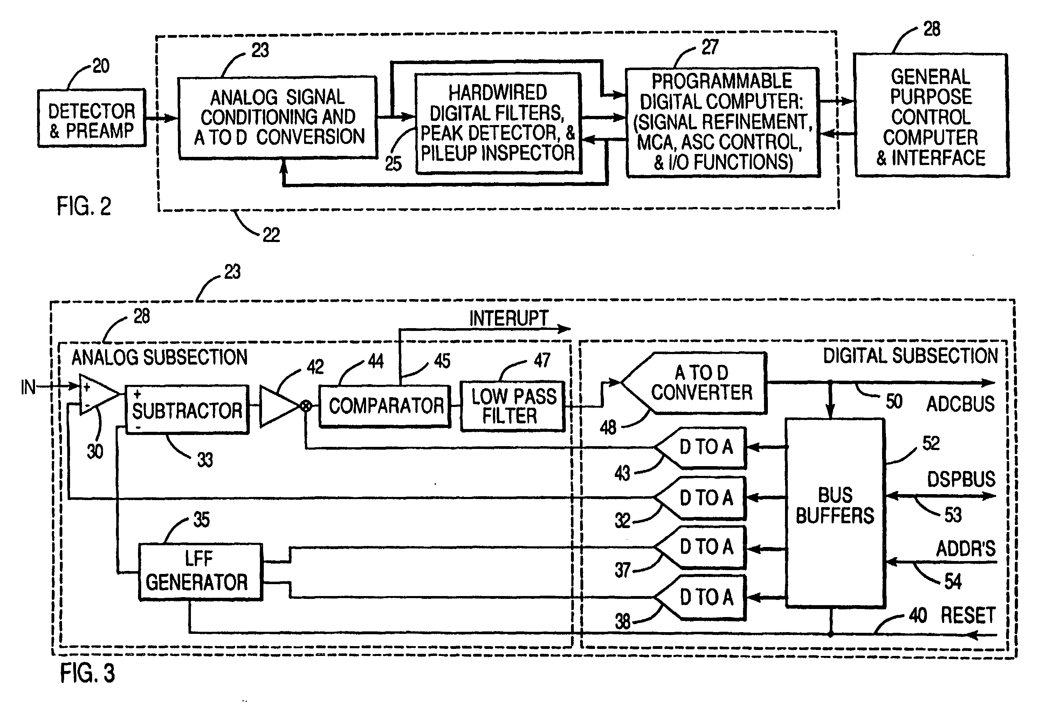

**FIG. 2** shows the basic structure of the invention digital spectrometer. Input from a conventional detector-preamplifier **20**, as in **FIG. 1A**, feeds into a digital spectrometer **22** comprising three functional blocks: an analog signal conditioning (ASC) and analog to digital converter (ADC) block **23**; a hardwired digital filter, peak detector, and pileup inspector (FiPPI) block 25; and a programmable digital computer block 27, which in a specific embodiment is a digital signal processor (DSP), for signal refinement, multichannel signal analysis, ASC control and input/output (I/O) functions. The digital spectrometer **22** connects to a general purpose control computer and interface **28**, from which it receives parameter values and control signals and to which it sends collected spectra. The function of ASC **23** is not required for the operation of the digital spectrometer blocks 25 and 27, but is our preferred embodiment. The functions of blocks 25 and 27 can be implemented using various circuitry, but in our preferred embodiment are implemented according to the specification presented below. The general purpose control computer and interface **28** are conventional and may include any of a variety of common personal or laboratory computers and interface standards. The details of interfacing a computer to a DSP are well known to those skilled in the art.

## 2: ASC: Analog Signal Conditioning and A to D Conversion Block

### 2.1. ASC Functional Philosophy

The ASC **23** has two primary functions: reducing the input signal's dynamic range and to adjusting its gain to satisfy **Eqn. 1**. Dynamic range reduction is accomplished by decomposing the preamplifier signal into two components: a "low frequency" signal fraction (LFF), of large dynamic range; and a "higher frequency" signal fraction (HFF), of much smaller dynamic range, carrying the signal of interest (SOI; compare **FIG. 1D** to **FIG. 1E**). The terms "low frequency" and "high frequency" are descriptive since, in this application, the LFF's fundamental frequency is much lower than the frequency bandwidth carrying the HFF SOI. The important concept is that a reasonable replica of the LFF signal fraction can be described by a relatively small number of parameters, allowing it to be readily generated and subtracted from the input signal. The remainder signal fraction then closely approximates the original HFF carrying the SOI and has a significantly reduced dynamic range, allowing it to be digitized using an ADC with a significantly reduced number of bits.

Under parametric control by DSP **27**, ASC **23** therefore generates a LFF replica, subtracts it from the input signal, and adjusts the remaining HFF replica's amplitude to meet **Eqn. 1**. Besides requiring fewer ADC bits, this approach has three additional advantages. First, the DSP **27** knows the ASC's control parameters and can use them to refine the energy spectrum it is collecting. Second, since x-ray pulses in the HFF fraction will fall nearly randomly (dithered) across the ADC's input range, the spectrometer **22**'s accuracy and linearity are relatively insensitive to the ADC's differential and integral non-linearity and completely insensitive to any DC offset voltages. Third, different types of preamplifier input can be accommodated merely by parametric adjustments. For CD preamplifiers, the LFF is merely a constant set to the value $V_{avg}$, as shown in **FIG. 1C**; for PR preamplifiers it is a sawtooth function, consisting of alternating ramps of slope $S_{avg}$ and resets, as shown in **FIG. 1D**.

### 2.2. ASC High Level Description

**FIG. 3** is a functional block diagram of ASC and conversion block **23.** An amplifier **30** amplifies the difference between the input signal from the detector-preamplifier **20** and a voltage level set by a digital-to-analog converter (DAC) Bias DAC **32** which allows the preamplifier signal to be centered about zero in the rest of the circuit. A subtracter **33** subtracts the output of a LFF generator **35** from amplifier **30**'s output. LFF generator **35**'s output waveform is controlled by inputs from an Offset DAC **37**, a Slope DAC **38**, and a reset line **40** from DSP **27**. Subtracter **33**'s output feeds an amplifier **42**, whose variable gain is controlled by a Gain DAC **43**. A comparator **44** examines the signal and alerts the DSP **27** on interrupt line **45** if it passes outside the ADC's input limits. A low pass filter **47** removes any signal frequencies above the ADC's Nyquist limit before it reaches an ADC **48.**

The ADC output connects both directly to FiPPI block **25** via a digital ADC output bus **50**, and indirectly to DSP block **27** via the bus buffers **52**. The buffers **52** attach to the bidirectional DSP data bus **53**, the DSP address lines **54,** and the reset line **40** and allow DSP **27** to load digital input values to the DACs **32, 37, 38,** and **43.** and sample the ADC output data stream on ADC output bus **50** as desired. Thus DSP **27** both directly controls all the ASC **23**'s functions and can also directly measure their effects on the ADC output **50.** With appropriate control software, this allows DSP **27** first to initially set preferred operating values for the ASC **23** and then to dynamically control the LFF generator **35**'s operation as well. The details of using interface buffers are well known to those skilled in the art of digital electronics and will not be described further.

### 2.3. ASC Block Output Signal

Under DSP **27**'s control, LFF generator **35** generates a resetting ramp function with a DC offset. For a CR preamplifier only a DC offset of value $V_{avg}$ is used (see **FIG. 1C**) . For a PR preamplifier, the DC offset is set to the value VL and the ramp's slope is adjusted to match the average slope $S_{avg}$ (see **FIG. 1D**). Three PR output signal samples, after ramp subtraction, gain adjustment and filtering, are indicated in **FIG. 1E.** After removal of the quasi-periodic ramp structure, the individual x-ray pulses appear as vertical steps with fluctuations in their arrival times. Trace **A** shows an average rate of arrival case. Traces **B** and **C** show temporary fluctuations from the average. Ramp subtraction leaves a negative slope between steps, but their amplitudes are not appreciably modified by this procedure and are to be recovered by the digital spectrometer.

For CR preamplifiers, the ASC output would look much like **FIG. 1C**, except that the vertical scale would be adjusted to fill the ADC's entire input range. In this case the regions between the x-ray pulses have the same exponentially decaying slopes as the preamplifier.

### 2.4. ASC Specific Embodiment

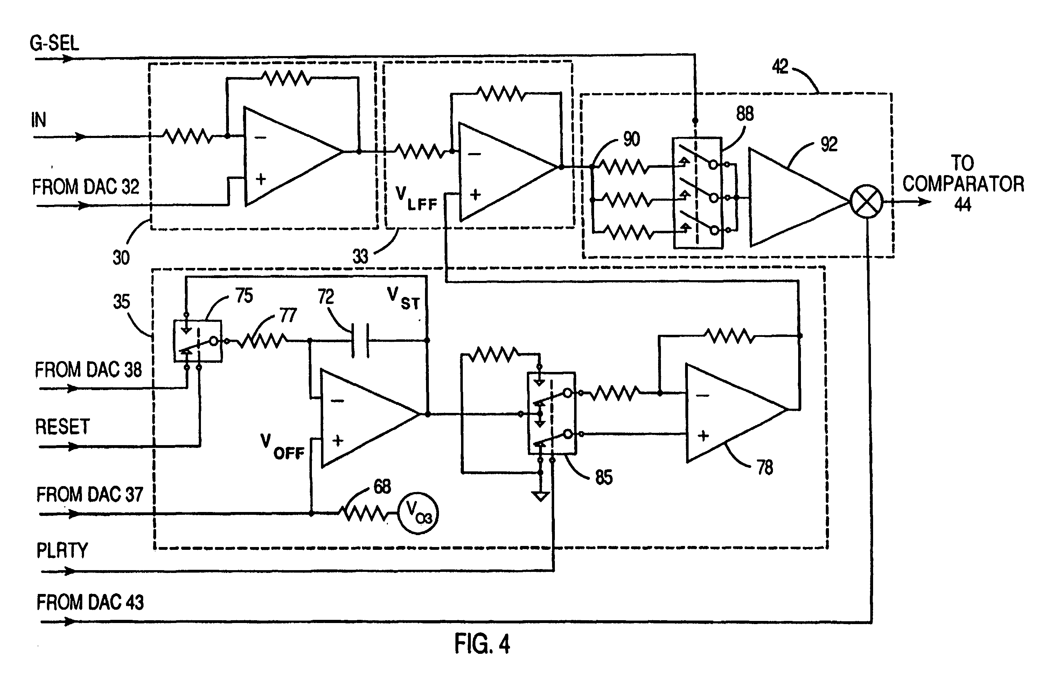

**FIG. 4** is a circuit schematic of the amplifier **30,** subtractor **33**, LFF generator **35,** and variable gain amplifier **42** blocks of ASC **20**. The circuit will be self explanatory to those skilled in analog electronics and needs little further discussion beyond a few design comments. Circuit details which are well known to those skilled in the art, such as power supply filtering or op-amp compensation, are not shown. The implementation are not unique and many other suitable arrangements can be readily devised.

Beyond centering the input signal in the ASC circuit's range, the primary function of amplifier **30** is to buffer the ASC from the input and ease noise requirements in the rest of the circuit by amplifying the input by a factor of about 3. It should therefore be implemented using a very low noise op-amp of adequate bandwidth.

The LFF generator **35** is a resettable current integrator, with offset voltage $V_{off}$, designed to generate low noise, high accuracy ramps with settling times of less than 5 µs on reset. Resistor **68** converts a current from DAC **37** into voltage $V_{off}$. Capacitor **72** integrates a current from DAC **38** until reset by switch **75**. Resistor **77** assures that the slew rate of PET op-amp **65** is not exceeded. Op-amp **78** and switch **85** allow the amplitude and sign of LFF generator **35**'s output to be matched to the input. DAC **37** is usually adjusted so that the LFP generator **35**'s output and the signal from amplifier **30** match immediately after preamplifier resets.

The variable gain stage **42** comprises a switch **88** and resistors **90** for coarse gain into the 100 ohm fixed input impedance Analog Devices AD603 **92**, a voltage controlled, variable gain op-amp for fine gain. To minimize noise, the fixed output noise op-amp **92** is only used for fine gain adjustments of about 12 dB.

The remaining blocks in the ASC section **20**, a comparator **44** and a low pass filter **47**, are straightforward to implement. The comparator is required to detect any occasions, see **FIG. 1E**, when fluctuations cause the ASC output signal to exceed the range LL to UL which is mapped onto the ADC's input range.

The low pass filter **47** limits the ASC output signal's bandwidth to less than the Nyquist frequency, $f_N$, which is half of ADC **48**'s sampling frequency, because all noise at higher frequencies will be "aliased" into the digitized output signal, unnecessarily increasing its noise. In this specific embodiment, the ADC operates at 20 MHz so $f_N$ is 10 MHz. While various filter designs could be employed, a 4-pole Butterworth filter is used in the specific embodiment because it has fast rolloff in frequency, minimum peaking in time and requires only four passive components. We have experimentally verified that, when the Nyquist criterion is met, spectrometer energy resolution is independent of sampling rate: embodiments operating at 2, 5, 10 or 25 MSA, with lowpass filters of 1, 2.5, 5 and 12.5 MHz respectively, all produced identical energy resolution for triangular filtering with 2 µs peaking time, even though the number of data samples collected in these cases varied from 8 at 2 MSA to 100 at 25 MSA. The several authors who have reported improvements in energy resolution with increased sampling rates have clearly failed to satisfy the Nyquist criterion. Selecting a sampling rate is therefore primarily a tradeoff between raising sampling rate to achieve good pulse pair resolution and lowering sampling rates to lower digital processing costs.

### 3. FiPPI: Filter, Peak Detection, and Pileup Inspection Circuit

### 3.1. FiPPI Design Philosophy

As discussed in the summary, the invention spectrometer carries out digital filtering in two stages. The first stage, designated the FiPPI, uses combinatorial logic to implement Filtering, Peak detection and Pileup inspection. In order to minimize filtering circuitry and maximize processing speed, no more complex operations than addition and subtraction are allowed in this stage. To optimize speed, all operations are pipelined to process input data at one point per clock cycle. Thus, if O(n,j) is the jth operation required by data sample n, then at time step i, we simultaneously execute operations O(n,1), O(n-1,2), O(n-2.3), etc.

This approach has significant limitations because compensatory adjustments cannot be made based on pulse-specific conditions and filters using only addition or subtraction are not accurate enough to meet our spectroscopic performance goals. Thus, as noted in the summary, in the second filtering stage a DSP is employed to make the specific corrections (based upon preamp type, local operating conditions, etc.) required to achieve the desired accuracy.

This approach is advantageous for several reasons. First, the FiPPI can be both very cheap and very fast.

For example, in the preferred embodiment, it is implemented in a single FPGA while running with a 20 MSA ADC. Second, the functions in the second step are only executed at the x-ray signal events' average arrival rate, which is much slower than the ADC sampling rate (e.g., 500,000 cps compared to 20 MSA) . Because the required corrections are typically simple formulae, applying them only to captured peak values is both simpler and faster than making them on the data stream itself (through preconditioning or deconvolution), as practiced in existing art. In the same embodiment, only a 20 MIP DSP is needed for second stage processing.

The FiPPI in the specific embodiment therefore implements only trapezoidal filtering, including triangular filtering as a subset. This choice does not degrade the spectrometer's energy resolution in the high count rate regime contemplated because, as Gatti and Manfredi showed in their paper entitled "Processing the Signals from Solid State Detectors in Elementary-Particle Physics" published in Revista del Nuovo Cimento (1986) Vol. 9(1), pp. 1-146, triangular filtering is actually the ideal fixed shaping form in the short shaping time regime where series white noise dominates. Even at longer shaping times the triangular shape is still very effective: Radeka showed in his paper entitled "Low Noise Techniques in Detectors", published in Annual Reviews of Nuclear Particle Science 38 (1988), pp. 217-277, that even for maximum energy resolution a triangular filter's resolution is only **8%** worse than an ideal cusp filter.

### 3.2. Specific Embodiment of the FiPPI, High Level View

In one specific embodiment, the FiPPI logic is implemented using a field programmable gate array (FPGA). This allows a high logic density in a small space. Further, because the FiPPI's logic is downloaded from a file prior to operation, it can be readily modified, either to meet new conditions or to incorporate design improvements. In other embodiments, where lower costs or higher operating speeds are desired, the FiPPI can be implemented with an application specific integrated circuit (ASIC) or other logic circuitry.

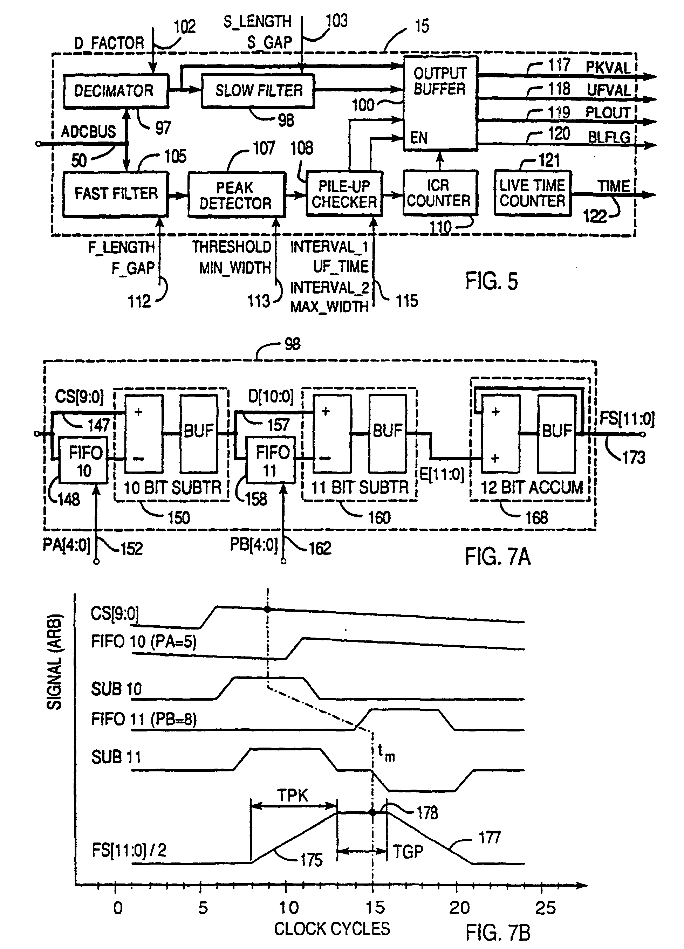

The topology of the FiPPI **25** in a specific implementation is indicated in **FIG. 5.** The data stream enters on ADC output bus **50** and feeds into both a slow and a fast signal channel. The first slow channel circuit, a decimator **97**, reduces the incoming signal's data rate by a preset factor. Its output is processed by a slow filter **98** which digitally implements trapezoidal filtering. Peak maxima in slow filter **98**'s signal output correspond to the energies of detected x-rays and can be captured by an output buffer **100**. The operation of the slow channel is controlled by three parameters loaded into FiPPI **25** from DSP **27**: a decimation factor **102** and the slow filter's length and gap values **103**.

The fast signal channel's principal function is to inspect the data input stream **50** and trigger output buffer **100** to capture appropriate values from the slow filter **98**. The first fast channel circuit is a fast filter **105**, which also digitally implements trapezoidal filtering, but with a much shorter time constant than in the slow channel. A peak detector **107** inspects its output for peaks which exceed a preset threshold value for at least a preset number of consecutive samples and then captures the arrival times of these peaks' maxima. These arrival times define the associated x-ray events' arrival times and are used to time the trigger to the output buffer **100**. Output pulses from the peak detector are inspected by a pileup checker **108** which rejects events whose maxima would overlap (pile-up) in the slow filter **98.** Each time the pileup checker **108** detects a good peak it triggers output buffer **100** to capture the slow filter's **98** output value for export to the DSP **27** for second stage processing. Each peak detector **107** output pulse also increments an input count rate (ICR) counter **110**. As in the slow channel, the fast channel's operation is controlled by parameters loaded from the DSP **27**: the fast filter length and gap **112**, the peak detector's threshold and minimum peak width test values **113**, and the interpeak interval, fast peak maximum width, and timing offset values **115** required by the pileup checker.

Each time output buffer **100** is triggered it also captures two other values: the value in ICR counter **110** and a flag to denote what type of slow filter value was captured. The buffer therefore outputs four values to the DSP **27**: two captured slow filter values PKVAL **117** and UFVAL **118**, the number of x-rays PLOUT **119** since the last output, and a flag BLFLG **120** indicating whether PKVAL **117** is an x-ray amplitude value or a baseline value for normalization purposes.

The FiPPI's final circuit is a livetime counter **121**, which measures the actual time TIME **122** the digital spectrometer spends collecting data. This is useful for two reasons. First, it is otherwise difficult to precisely time data collection processes started under software control by control computer **28**. Second, in a multiple detector system it is important for each spectrometer to be able to accurately measure its own livetime so that its count rates can be accurately determined.

### 3.3. Operation of the Subcircuits in the FiPPI Sipecific Embodiment

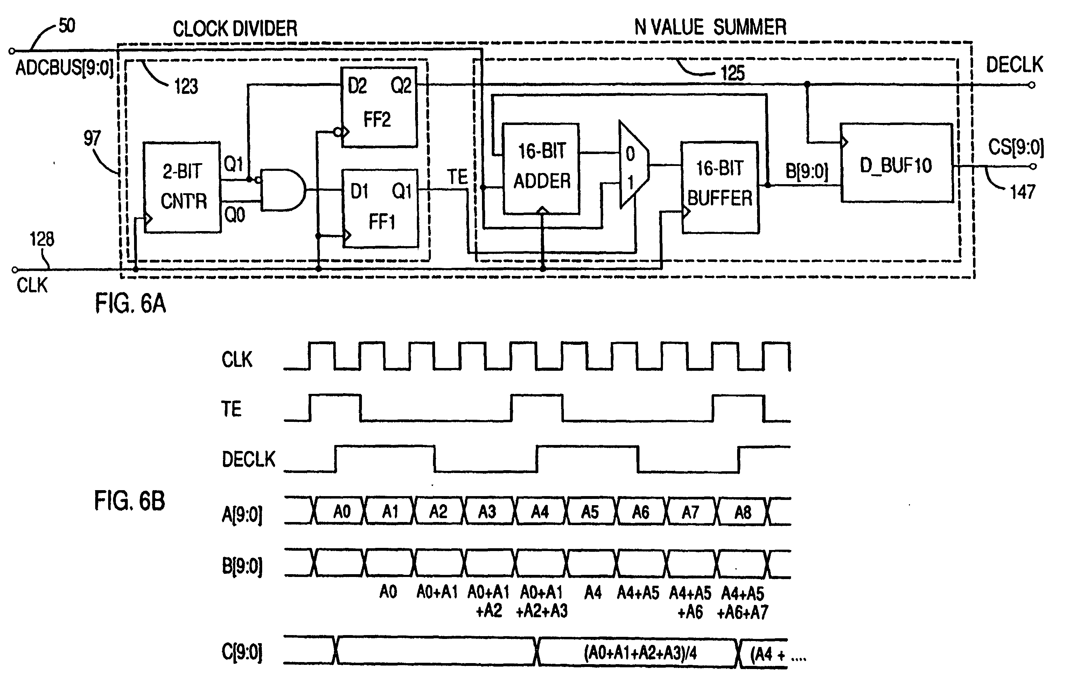

The implementation and operation of the subcircuits in the FIPPI preferred embodiment are shown by the circuit schematics in Figures **6** through **13** with their accompanying representative signal traces. These circuits and traces will be largely self explanatory to those skilled in the art of digital electronics. In the following paragraphs we will primarily relate their functions and indicate any design issues which are not obvious

### 3.3.1. Decimator

**Fig. 6A** is a circuit schematic of the decimator **97**, with representative signals shown in **FIG. 6B**, of a specific embodiment hardwired to decimate by 4. It comprises a clock divider **123** and an N value summer **125**, which adds four consecutive values from 10 bit input line ADCBUS **50** and outputs their sum on the 10 bit line CS **147**. If more accuracy is desired, more bits may be retained in CS. Using similar techniques, circuits which decimate by any arbitrary parameter D_Factor **102**, may be readily built.

### 3.3.2. Slow Filter Module

The trapezoidal filter function values $\{T_i\}$ of a stream of data values $\{d_i\}$ at times $\{i\}$ are given by the equation

$$T_i = - \sum_{k=i-2L-G+1}^{I-L-G} d_k + \sum_{k=i-L+1}^{i} d_k \qquad (3)$$

Here L and G are the slow filter interval length $L_s$ and gap interval $G_s$ and enter the module as Parameters **103**. When the $G_s$ is zero, a triangular filter function is obtained. Both forms have been extensively discussed in the analog spectrometer literature. The trapezoidal function's amplitude can be made independent of charge collection time if the gap $G_s$ is adequately long, thus avoiding the phenomenon of ballistic deficit. Its signal to noise ratio for short shaping times is not as good as the triangular function's, however. In the present case the choice is set by the parameters S_Length and S_Gap **103.**

To avoid long summations which consume excessive FPGA real estate and also operate slowly, **Eqn. 3** can be recast as:

$$T_i = T_{i-1} + d_i - d_{i-L} - d_{i-L-G} + d_{i-2L-G} \qquad (4)$$

Since the partial sum $(d_{i-L-G} + d_{i-2L-G})$ is just the partial sum $(d_i - d_{i-L})$ evaluated $L_s+G_s$ timesteps earlier, we discover that it is possible to create $T_i$ according to **Eqn. 4** using only two first-in-first-out (FIFO) memories: one $L_s$ bits deep to hold values for making the terms $(d_i - d_{i-L})$ and one $L_s+G_s$ bits deep to hold values to implement **Eqn. 4**.

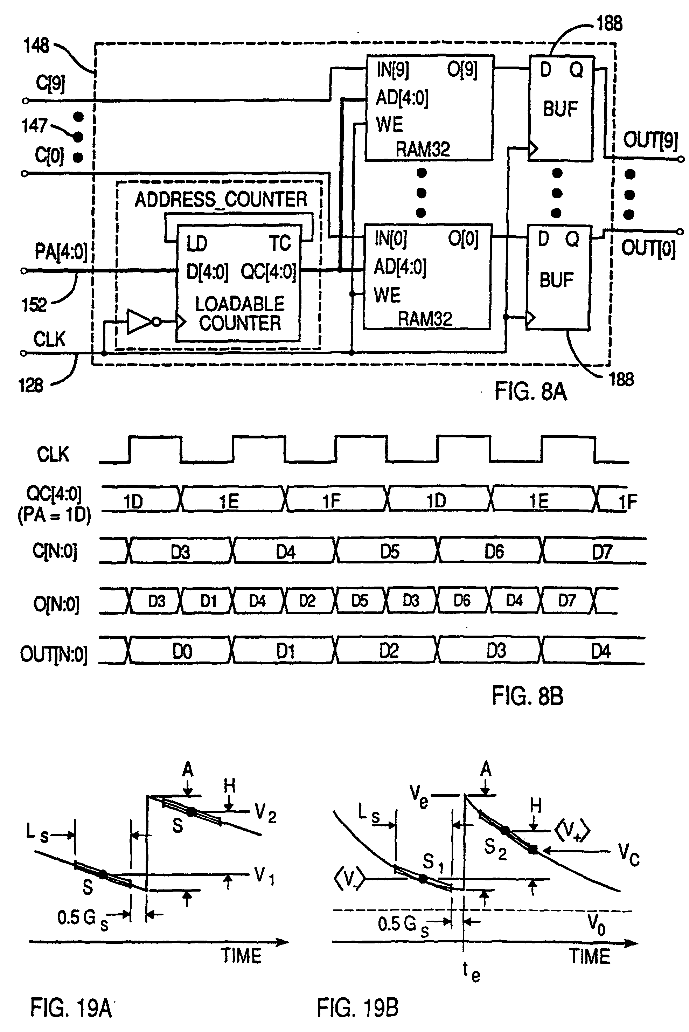

The circuit schematic in **FIG. 7A** and the waveforms in **FIG. 7B** describe an implementation of the slow filter module **98**.that creates $T_i$ values according to **Eqn. 4** for a 10 bit input. The width of all the components in the filter would expand by 1 bit for each bit of decimation. The input CS[9:0] **147**, from the decimator **97**, has a slight slope both before and after a typical pulse to represent the effects of detector leakage current and/or the operation of the ASC **23.**

FIFO memory **148** and subtracter **150** create the terms $(d_i - d_{i-L})$, where L is set by parameter PA[4:0] **152**. FIFO memory **158** and subtracter **160** create the terms $(d_i - d_{i-L}) - (d_{i-L-G} + d_{i-2L-G})$, where L+G is set by parameter PB (4:0] **162**. Accumulator **168** then creates the values $T_i$ of **Eqn.** 4 on line FS[11,0] **173**. Pipeline delays of 3 clock cycles are produced. The use of 12 bits in accumulator **168** is just an engineering tradeoff for XAS applications where only a narrow range of x-ray energies is expected and the ASC gain can be optimally set so one x-ray step is about 5% of the ADC input range. In a more general design an increased number of accumulator bits would be advantageous.

Thus a step function in C[9:0]) P[11:0] becomes a trapezoidal pulse whose rising and falling times **175** and **177** both equal the "peaking time" TPK, which equals L. Its flattop **178** has duration TGP, the "gap time," which equals G the difference between PA **152** and PB **162**. The black dot on trace FS[11:0] in **FIG. 7B** shows the time $t_m$ when the pileup checker captures FS[11:0] to output buffer **100** if the peak is not piled-up. When CS[9:0] is also captured, this happens 3 clock cycles earlier to account for pipeline delays.

The output FS[11:0] **173** has a non-zero baseline which is proportional to the slope in signal CS[9:0] **147**. Thus, peak amplitudes must be measured with respect to the baseline, which must therefore also be determined accurately. Also, when the slope in CS[9:0] is not constant in time (as for a DC preamplifier), then the baseline will have to be measured locally for each detected x-ray pulse.

The combination of decimator **97** and slow filter **98** allows peaking times of up to 400 samples (20 µs for a 20 MSA ADC) using FIFOs which are only 32 deep and a 12 bit accumulator, whereas a direct implementation would require 400 deep FIFOs and an 18 bit accumulator. Not only does this require fewer FPGA gates, but shorter word lengths allow the circuit to run fast enough using a cheaper grade FPGA than would otherwise be the case.

### 3.3.3. FIFO Specific Implementation

**FIGS. 8A** and **8B** show a circuit and waveforms of a specific implementation of FIFO **148**, using a Xilinx 4000 series FPGA for $L_s$ equal to 3. The other FIFOs in the design are implemented similarly. Ten 32 bit deep memories (one per data bit) are cyclically addressed by a cyclical address counter **185**, whose output QC is out of phase with the clock **128**. The Xilinx memories therefore display their stored data 0[9,0], which are captured by buffers **188,** when first addressed by QC. These values are then overwritten by new values of C **147** as the clock goes positive. Thus a read and a write are accomplished in a single clock cycle, with the output values delayed from the input by PA **152** counts.

### 3.3.4. Past Filter

The fast filter **105** is implemented in exactly the same way as the slow filter except that it has its own control parameters F_Length and F_Gap **112** and works directly with the 10 bit output **50** of the ADC **48**. Its peaking time and gap length, from **Eqn. 4** are written as $L_f$ and $G_f$, the subscript f signifying "fast."

### 3.3.5. Pileup Inspection

### 3.3.5.1. The Meaning of Pileup

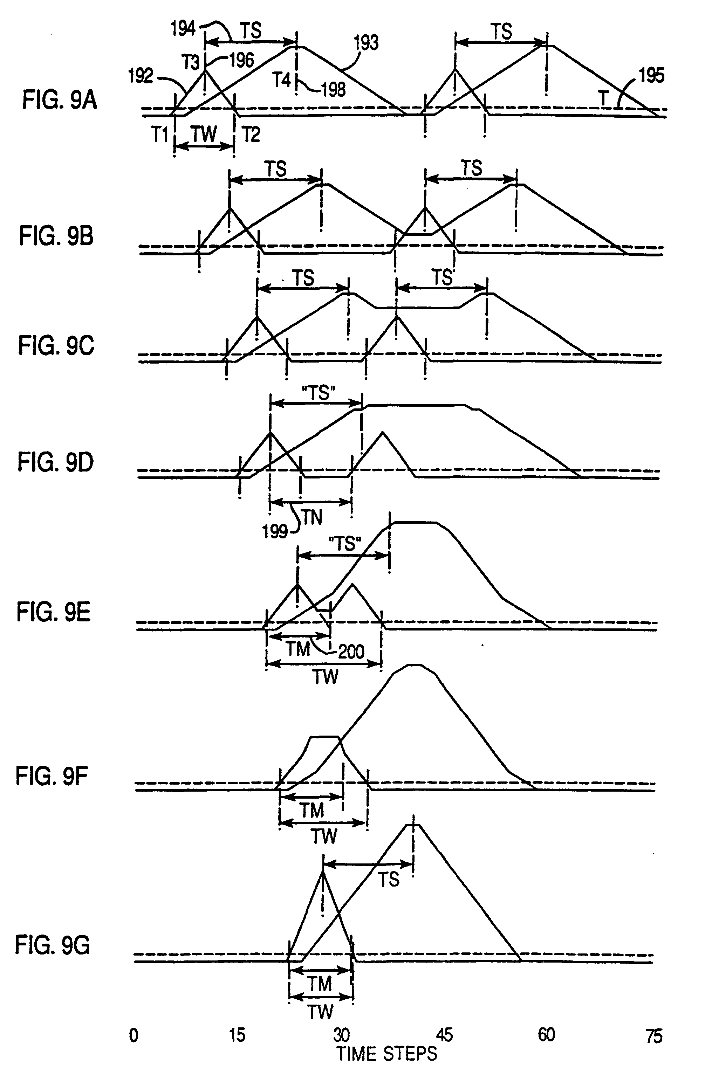

To understand pileup inspection, one must understand how the slow filter **98** and fast filter **105** pulse outputs change as a function of the time interval between consecutive input pulses **FIGS. 9A-9G** present this information, showing superimposed fast filter **192** and slow filter **193** output traces as the time between two input pulses decreases. Provided the two peaks are adequately separated (**FIGS. 9A-9C**) the amplitudes of the slow filter peaks remain valid measured of the x-ray energies. At shorter times these peaks merge and must be rejected. The minimum.allowed separation is when the second pulse begins (corrected for pipeline delay) one clock cycle after the first peak is sampled. Otherwise the two pulses are piled up. As the interval between the pulses continues to decrease, the fast pulses will also eventually overlap, and pile up as well (**FIGS. 9E-9F**).

### 3.3.5.2. Peak Detection

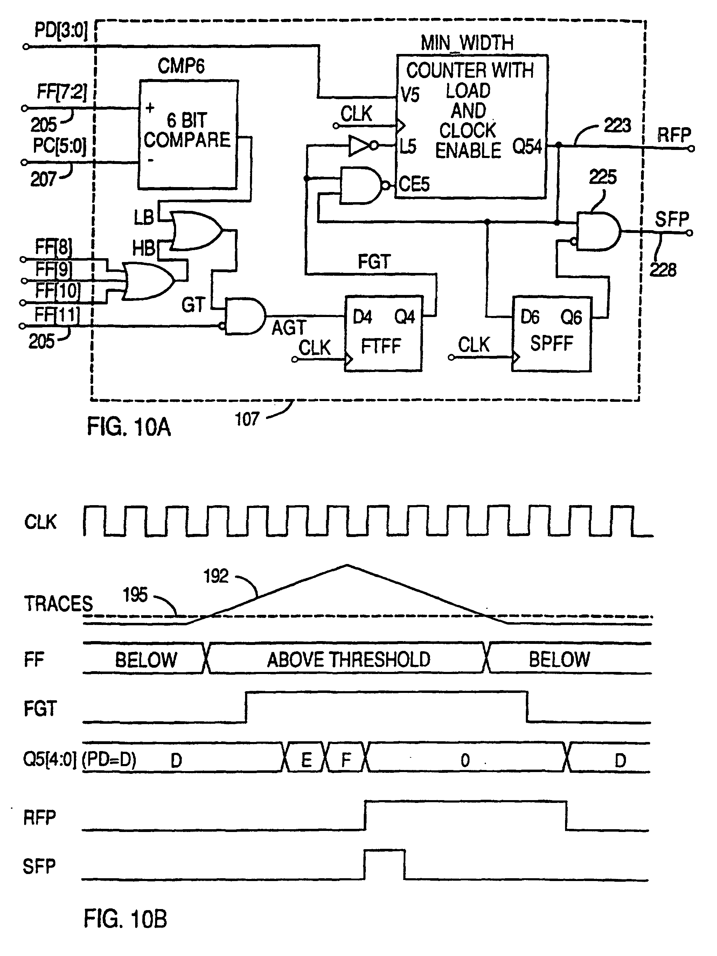

The first issue is to detect pulses which is the function of the peak detector **107**. The preferred implementation offers improved performance over classical discriminators which have timing jitter and do not operate well for pulse amplituded close to the noise floor. Here, as shown by the circuit and traces in **FIGS. 10A-10B**, a threshold level **195** is set by a parameter PC **207**. However, signal values FF **20**5 are only recognized as a peak when they exceed the threshold at least a minimum number min_width **113** (set by parameter PD **208**) times in a row. Under this condition the signals RFP **223** and SFP **225** are generated. RFP lasts as long as FF continues to exceed the threshold. The values of both the threshold **195** and min_width **113** may be adjusted to increase noise immunity when working with soft x-ray pulses which do not rise far above the noise floor.

### 3.3.5.3. Arrival Time Determination

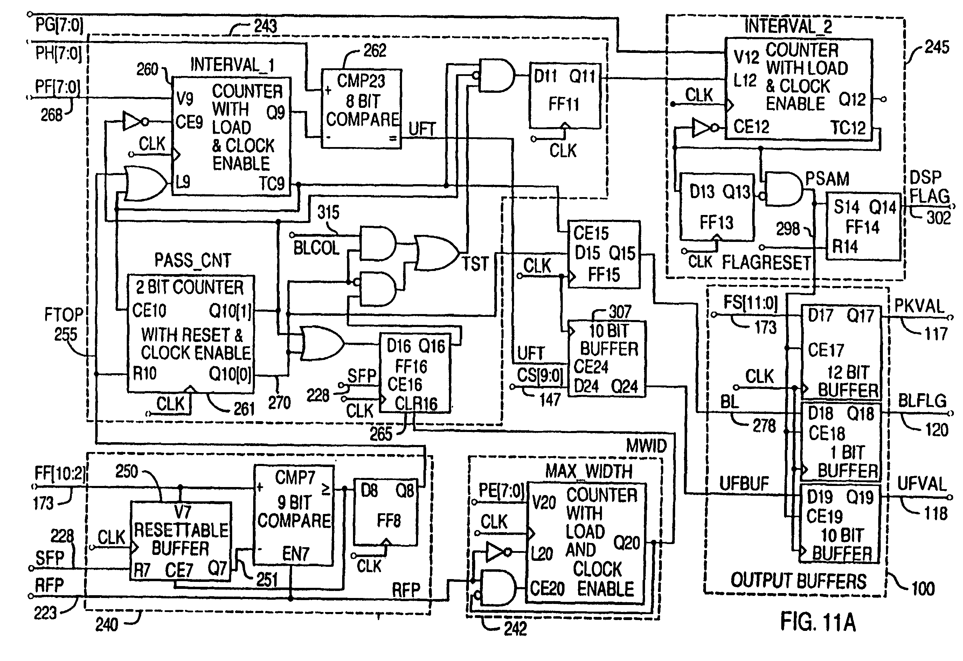

The second issue is to determine pulse arrival times, which is the function of Block **240** of Pileup Checker **108**, as shown by the circuit and traces in **FIGS. 11A-11B**. Here the fast peak's location is determined not by its crossing of threshold **195,** but by the time T3 **196** of its maximum value. Whenever RFP **223** is high, this block compares FF **173** to previously captured maximum values in buffer **250**, setting FTOP **255** high each time a new maximum is found. Arrival time locations TS **196** are now essentially amplitude independent, greatly reducing time jitter and removing any energy dependent skewing of slow channel peaks amplitude determinations.

### 3.3.5.4. Slow Peak Amplitude Capture

Once a peak is detected, the FiPPI must determine if it is free of pileup and, if so, capture its amplitude in the slow channel. The actual capture is carried out by the Output Buffer **100**, which is shown in more detail in **FIG. 11A** and is triggered by the signal PSAM **298**. The timing of slow peak amplitude capture is conceptually straightforward, as shown in **FIG. 9A**. The desired capture time T4 **198** is at the trapezoid's flattop midpoint. Because the digital processing operations in both fast and slow channels are fixed in number, T4 **198** is separated from the fast peak's arrival time T3 **196** by a constant time TS **194,** which depends only on such FiPPI control parameters as D_Factor **102,** S_Length and S_Gap **103**, and F_Length and F_Gap **112.** Thus, following fast peak detection, a counter can measure time TS **194** and transfer the slow filter **98** output transferred to buffer **100**.

### 3.3.5.5. Slow Channel Pileup Inspection

The pileup inspection implemented digitally in the FiPPI is conceptually similar to that commonly found in analog spectroscopy circuits: requiring that successive pulses must be separated by some multiple of the slow channel peaking time. In the case of analog triangular filtering, a multiple of 1.5 - 2.5 is commonly used. As **FIG. 9A** shows, for truly trapezoidal filtering, successive pulses need only be separated by a single slow filter peaking time plus half the flattop time. The fact that analog "triangular" pulses have tails that extend significantly beyond one peaking time on the decaying side of the peaks is the source of their extended inspection times. Digitally generated pulses terminate cleanly, as shown in **FIG. 7B**, allowing shorter pileup inspection times to be used. Resulting increases in count rate capability of 2 or more have been demonstrated.

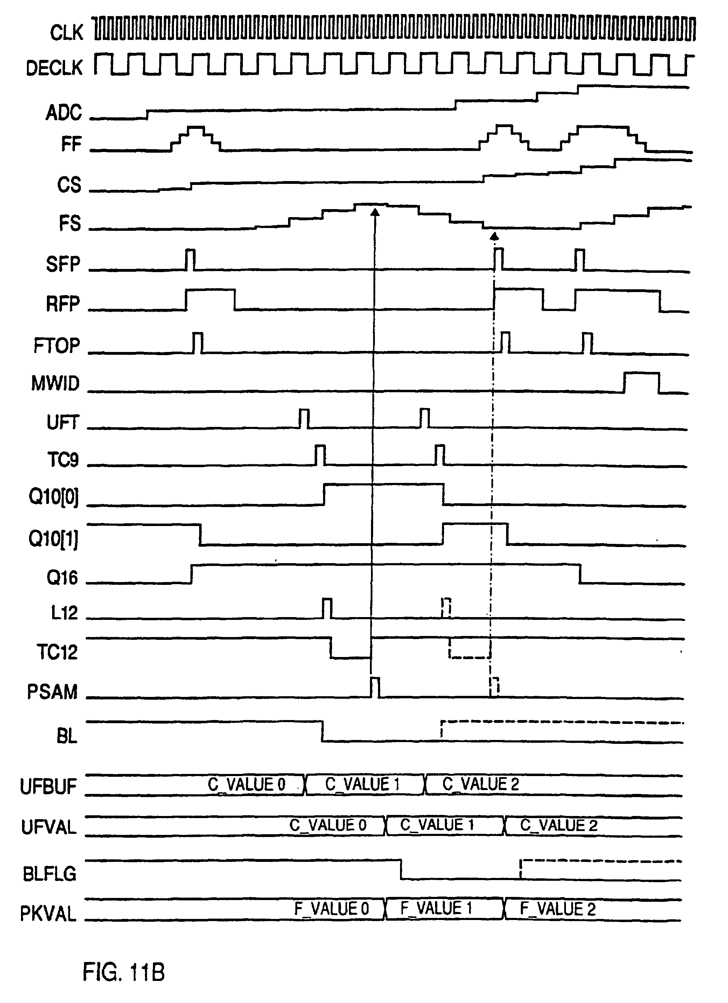

The trailing edge pileup inspection is carried out by block **243** in the circuit shown in **FIG. 11A** with traces shown in **FIG 11B**, which measures the time intervals between adjacent terminations of the signal FTOP **255**. A falling FTOP signal, which marks a fast peak maximum and thus its arrival time, starts the Interval_1 Counter **260**, which is loaded with the parameter PF **268,** the pileup inspection period. If the counter overflows successfully and the value stored in FF16 **265** shows that the pulse does not have leading edge pileup, then a signal is issued to a second interval counter block **245** which finishes counting the time TS **194** at which the slow channel peak should be captured. The Interval_2 counter is required to accommodate pipeline delays in the slow filter, which may be running with a decimated clock.

When Interval_1 counter **260** overflows, it is restarted and Pass_Cnt counter **261** is incremented. If Interval_1 counter **260** overflows a second time, it means that the interpulse period has been long enough for the slow filter output to return to baseline. Under this condition, if the DSP **27** has set the flag BLCOL **315**, then Interval_2 counter **245** will be triggered to initiate a baseline capture. The bit BL **278** is captured by buffers **100** as the output value BLFLG **120** to signify this condition.

Whether or not a peak is free of leading edge pileup is determined by flipflop FF16 **265**, which stores the value of Pass_Cnt counter **261** each time a new fast pulse is detected, as signaled by the signal SFP **228**. If this value is 1, then a time of at least PF **268** has passed since the last pulse.

When the unfiltered output CS (see **FIG. 7B**) is required, it must be captured 3 slow clock cycles before time T4 **198**, which is before Interval_1 counter has actually determined if the peak will be valid. This time is therefore determined by comparator CMP23 **262**, which causes the appropriate value of CS to be captured to an intermediate buffer **307**, where it can be transferred to Output Buffer **100** if the peak is valid.

### 3.3.5.6. Fast Pileup Test

A first fast pileup test is implemented by block **242** in **FIG. 11A**, which measures the width of the fast pulse a the threshold value **195**. As **FIGS. 9E-9F** show, if this value TW is more than a maximum value TM **200**, then there must be pileup in the fast channel and the slow channel peak value will be invalid. This result, when detected, is stored in flipflop FF16 **265**, which prevents the slow peak capture. Because both the parameter TM and the threshold can be adjusted on a case by case basis, this is a very effective test when coupled with our fast peak detection circuit. With quasi-monochromatic x-rays, as in XAS, the parameters can be tuned to achieve pileup rates which can be up to 3 orders of magnitude lower than with conventional analog tests.

### 3.3.5.7. Input Countrate Counter and Timer

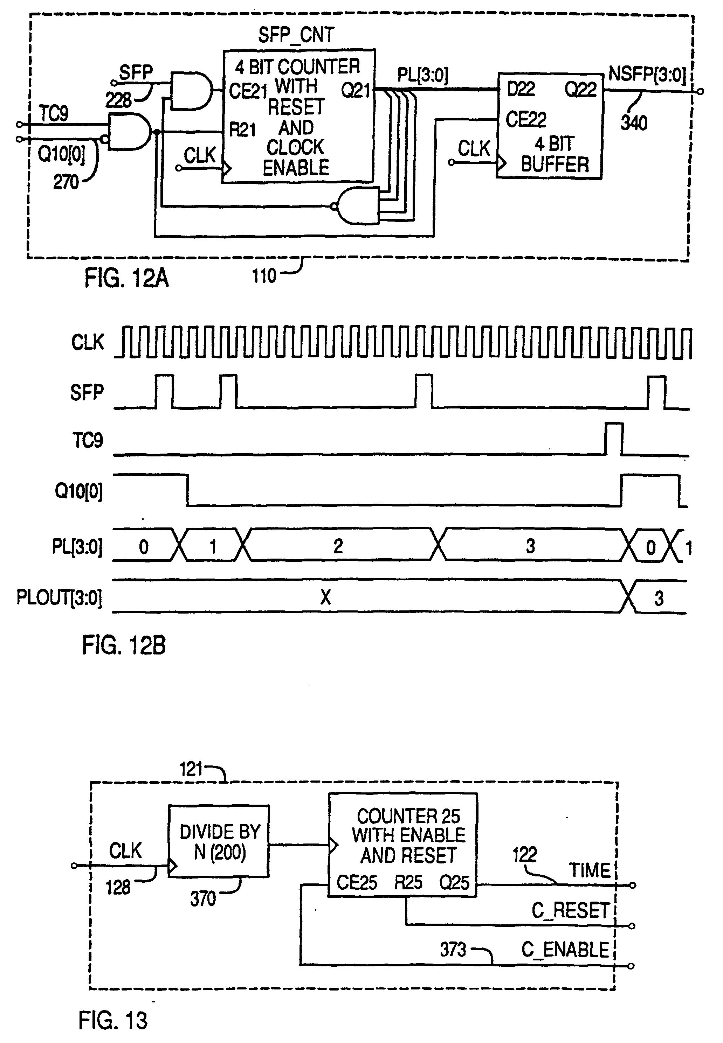

The circuit and traces in **FIGS. 12A - 12B** show an embodiment of the FiPPI **15** input count rate counter 110 (see **FIG. 5**) . This circuit uses the fast pulse arrival signal SFP **228** and the output Q10[0] **270** of Pass_Cnt counter **261** to record the total number of x-ray pulses detected for each valid x-ray pulse detected. Its output NSFP **340**, can be read by DSP **27** at the same time as it reads buffers **100.**

The circuit in **FIG. 13** shows an embodiment of the FiPPI **15** live time counter **121** (see FIG. **5).** This circuit counts a divided clock signal at all times that the DSP **27** signals, via C_Enable **373**, that it is in data collecting mode.

### 3.3.5.8. Optional Fast Pileup Test

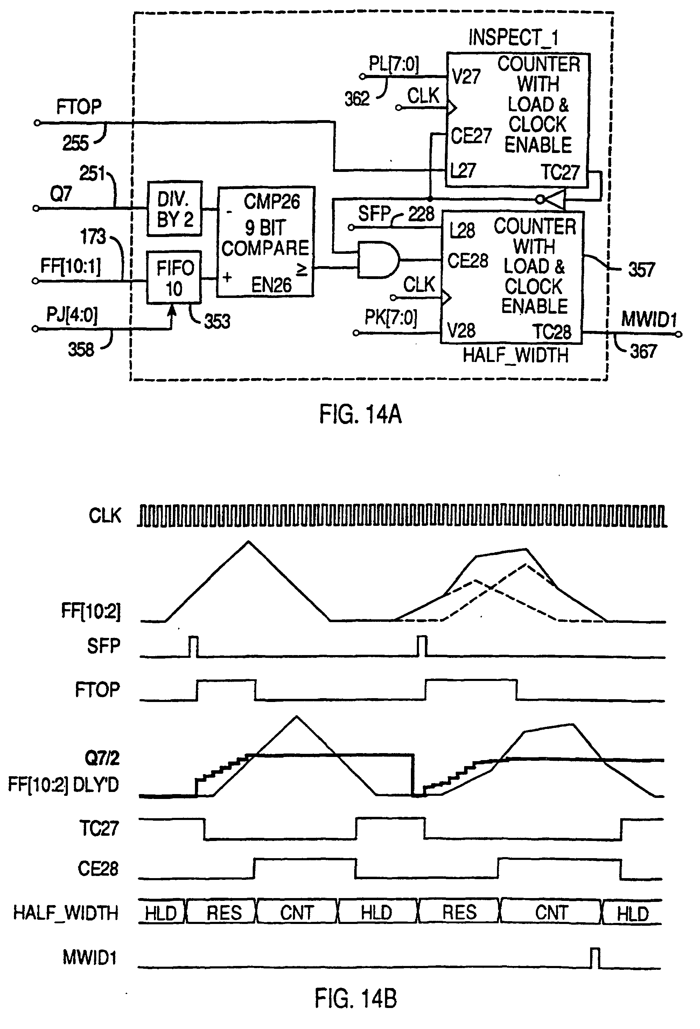

A second fast pileup test can be additionally implemented according to the circuit and traces shown in **FIGS. 14A - 14B**. This circuit measures the width of the fast peak at one half of its maximum. Other ratios could be readily substituted. The Inspect_1 counter sets the inspection period PL **362** while the Half_Width counter **357** compares the peak width to the maximum allowed value PK. The fast pulse signal FF **173** is delayed PJ **358** counts by FIF010 **353** until Q7 **251** has a chance to attain its maximum value. If the fast peak is piled up according to this test, output MWID1 **367** can be used to set flipflop FF16 **265** to prevent the slow peak capture.

This test works particularly well when pulses with a wide range of amplitudes are present, preventing the fast pulse and pileup tests to be optimized for low amplitude pulses where the threshold may be a sizable fraction of peak amplitude. In this case there may be quite a wide range of times over which two low amplitude pulses can pile up and still have the sum of their two widths be less than the base width pileup test value.

### 3.3.6. Optional Output Buffering

Although the circuitry is not shown in this specific implementation, we have found it to be advantageous, in systems designed for the highest counting rates, to replace the three output buffers **100** by three short FIFOs, each capable of storing several captured values. This modification allows the DSP **27** more flexibility in how it collects captured peak values from the FiPPI. In the preferred implementation shown, the DSP operates under interrupt control, pausing in its computations to fetch a captured value in less that 0.5 µs each time one is signaled. While this system uses fewer FiPPI circuit resources, it requires more, and on average slower, DSP code to service the interrupt routines. With the optional FIFO output, the DSP can poll the FiPPI for data at a fixed point in its processing routine and never be interrupted, which increases its average processing speed. This implementation is therefore preferred when the very highest data rates must be accommodated.

We have modeled this operation and found that, if the DSP **27** polls DSPFLAG **302** at least once per event it processes, and is fast enough to process events at their average rate, then this buffer need only be about 4 events deep to capture the vast majority of all events.

### 4. DSP: Digital Signal Processing Computer and Logic

### 4.1. DSP Overview

In accordance with our design philosophy, the DSP carries out those tasks, procedures, and computations which are required either on a "per event" basis or less often, to maintain system level operations. As shown in **FIG. 2**, the DSP **27**'s major tasks include interacting with the general purpose control computer and interface **28**, adjusting and controlling the ASC **23**, and collecting, correcting and histogramming data values from the FiPPI **25**. In the general practice of the invention, these functions could be met by a wide variety of combinations of processor and memory, the choice in any particular embodiment being primarily an engineering decision based on such considerations as cost, speed, size, and so forth.

### 4.2. DSP Hardware Implementation

An NEC µPD77016 processor is used in the specific embodiment. It was selected because it is a fast, low cost, 16 bit DSP with enough internal memory to hold both its control program and the spectra produced by its MCA function. Its 2.0 K X-data memory is dedicated to MCA spectra, allowing spectra to be histogrammed into up to 1024 bins, each 32 bits (or more than 4 billion counts) deep. Its 2.0 K Y-data memory stores the variables and constants required to control system operation; data to monitor system performance; and a circular buffer to temporarily store FiPPI events for MCA processing. Internal memory is not necessary for the invention but reduces total package count and cost and may allow higher speed operation. Executing instructions at one half its externally applied clock frequency, the DSP is clocked at exactly twice the rate of the ADC and FiPPI, to produce synchronous operation of one instruction per ADC sample. It has 4 external interrupt lines, which allow it to respond to the ASC **23**, FiPPI **25**, and external control computer **28.**

The general issues associated with programming and interrupting microprocessors and DSPs are well known to those skilled in the art and will not be described in any detail. General flow charts of the control programs will be shown and attention will concentrate on the specific algorithms which have been invented to produce the desired instrument function.

### 4.3. DSP High Level Software Descriptions

### 4.3.1. Supervisory Control Program

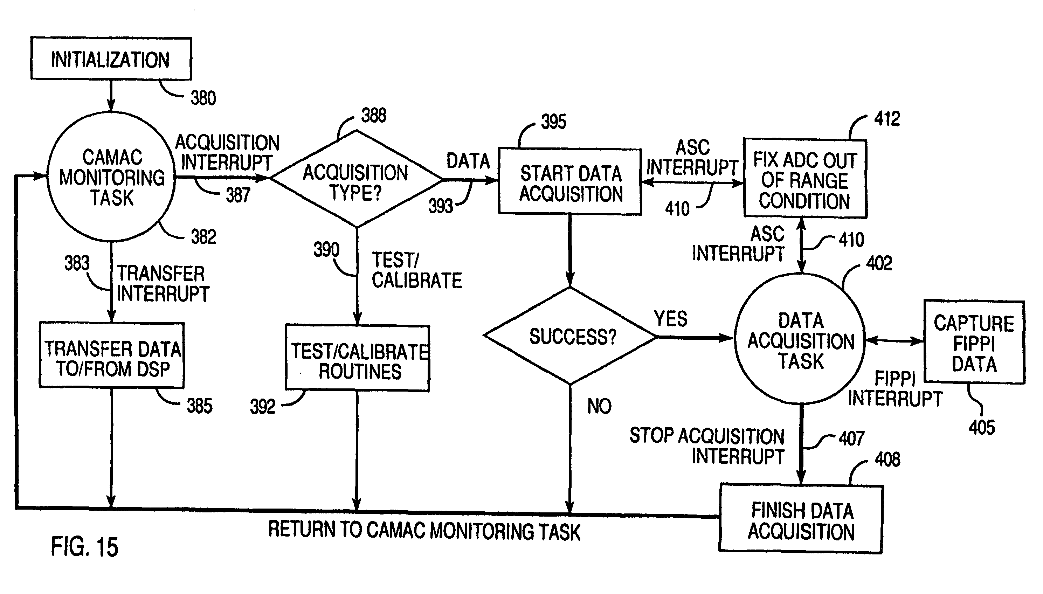

**FIG. 15** shows a high level flow chart of the supervisory control program used in the specific embodiment. Bold arrows trace the flow of program control through a single data collection cycle. Operation begins by downloading the DSP's program and Initialization **380**, including setting up registers and initializing constants in **Y-data** memory.

The program then proceeds to its primary control loop, the CAMAC Monitoring Task **382**. In the specific embodiment the control computer interface was implemented using the CAMAC interface standard, IEEE Standard 583-1975, but this choice is not critical to the invention's function. In the CAMAC Monitoring Task **382** the DSP is essentially in a loop, waiting to be interrupted.

Data transfers to and from the DSP are initiated by the control computer **28** through its interface to the digital spectrometer **22**. The details of implementing such interfaces are well known to those skilled in the art. These requests for data transfer cause the interface to generate a Transfer Interrupt **383** to the DSP. When such a Transfer Interrupt **383** is received, the DSP moves to Transfer Data To/From DSP **385**. Here it reads two status registers in the interface **28** and uses their contents to determine whether it should transfer a data word to a DSP memory location from an interface register or vice versa. It makes the requested transfer and then to the CAMAC Monitoring Task **382**. Multiple word data transfers are similarly implemented using the DSP's block data transfer mode at rates up to 2 MBytes/second.

Before the digital spectrometer **22** can be controlled effectively, it requires the values of various constants and control parameters which must either be downloaded from the control computer **28** (e.g., the FIPPI **25** filter lengths) or be determined experimentally (e.g., a Slope DAC 38 estimate) by calibrating the system. Of particular note is the control word RUNTASKS, which is a set of flags to control DSP program flow. When an Acquisition Interrupt **387** is received. Acquisition Type **388** is determined by testing RUNTASKS.

### 4.3.1.1. Test/Calibrate Routines

If Acquisition Type is Test/Calibrate **390**, the DSP executes Test/Calibrate Routines **392**, which are used to verify correct system operation and calibrate the DAC controls to the ASC. They include:

1) Write to Bias **32**, Offset **37**, Slope **38**, and Gain **43** DACs to set the operating point of the ASC **23**.

2) Measure overall system gain by first disconnecting the input to spectrometer **22** and then recording the output of ADC **48** for a series of voltage values applied to Op Amp **30** using Bias DAC **32**. A fit to the results yields ADC units per Volt input, which is just the digital spectrometer's gain. This can be multiplied by the preamplifier gain in Volts per eV of x-ray energy to obtain overall system gain in ADC steps per eV. If the preamplifier gain is not known, a measurement of a known x-ray energy can be made to provide this constant.

3) Calibrate Offset DAC **37** in ADC units, by the same process as in routine 2) above, to obtain the normalization constant DACperADC, the number of Offset DAC steps required to change the ADC output by one step.

4) Calibrate the slope generator by setting known values into the Slope DAC **38** and measuring the time required for the generated signal to go out of the ADC input range. Slope depends only on the current input from Slope DAC **38** and the size of the integration capacitor 72, thereby providing a good secondary test of the DACperADC value.

5) Test ADC differential and integral non-linearity using the ASC's slope generator as a controlled input waveform.

6) Monitor ASC interrupts without acquiring spectrum data.

7) Capture ADC output signal traces with DSP. This mode, in which the ADC-DSP combination essentially operates as a simple digital oscilloscope, can be particularly useful for debugging detector problems by allowing representative signal traces to be captured.

8) Capture FiPPI Decimator output values C[9:0] **147**. This has the same utility as routine No. 7, but works with the slower Decimator output.

9) Verify correct operation of the entire spectrometer by first disconnecting the spectrometer's **22** input and then collecting a spectrum using voltage steps output by Bias DAC **32** to simulate input x-ray signals. The output spectrum should be a single narrow peak whose location is a direct measure of the overall system gain and whose width measures the spectrometer's noise. This test is a valuable diagnostic that the complete instrument is operating correctly for the selected digital filter parameters.

These tests allow the invention digital spectrometer to be both self testing and self calibrating and are also useful for quality control tests in manufacturing. In normal operation, the control computer **28** runs a test suite of these programs to assure that the spectrometer is operating correctly prior to attempting to collect data.

### 4.3.1.2. Data Acquisition

When the Acquisition Interrupt Type is Data **393**, then the DSP moves to the Start Data Acquisition Routine **395** and executes the following tasks to prepare for data acquisition (assuming a reset type preamplifier) .

1) Set the ASC's Bias DAC **32**, Offset DAC **37**, Slope DAC **38**, and Gain DAC **43** to specified values determined by the x-ray energy range, characteristics of the preamplifier, and initial rate estimates.

2) Reset the MCA data and statistics to zero.

3) Write control parameters Decimation Factor **102**, Slow Filter Length and Gap values **103**, Fast Filter Length and Gap **112**, Peak Detector Test Values **113**, and Pileup Checker Values **115** to the FiPPI and restart FiPPI operation.

4) Initiate ASC monitoring by observing ADC values versus time, with the slope generator disabled. Estimate ramp slope in the preamplifier signal and compute a Slope DAC **38** value to match it. Then load the reset value into Offset DAC **37** and enable the slope generator **35.**

5) Enable the ASC Comparator Interrupt to interrupt the DSP if the ASC's **28** output signal exceeds the ADC's **48** input range.

6) Collect an initial set of slow filter baseline values and compute baseline mean and variance.

7) Set up pointer values to a circular event loop buffer in DSP Y-data memory to prepare for receipt of FiPPI data.

8) Enable PiPPI interrupt signal DSPFLAG **302** allowing the FiPPI to signal the DSP when it captures a valid peak amplitude.

### 4.3.1.3. Data Acquisition Task

If any of these procedures fail, the program aborts, otherwise it proceeds to Data Acquisition Task **402**. This task is designed to accommodate bursts in data arrival rate up to 2,000,000 cps (which is the inverse of the minimum 0.5 $\mu$sec slow channel peaking time) while processing data at average rates of up to 500,000 cps. This is accomplished by storing incoming data in a circular buffer, which is a fast process under interrupt control, and processing them at a steady rate in the intervals between interrupts. This reduces the average processing rate by a factor of about 4 and allows the use of a much less expensive DSP.

Capture **FiPPI** Data Routine **405** carries out the data capture step. Here the DSP reads two 16 bit words from the FiPPI containing the values PKVAL **117,** UFVAL **118,** BLFLG **120,** and PLOUT **119.** It then writes these two words onto the circular buffer, and increments the pointer to their address. These operations require only 5 or 6 clock cycles. Control then returns to the Data Acquisition Task **402** to processes any data remaining in the circular buffer. This continues until either a preset maximum number of events are processed or until a Stop Data Acquisition **407** occurs. In either case, the program proceeds to Finish Data Acquisition **408,** whose primary functions are to disable the ASC Comparator Interrupt **45**, disable the **PiPPI** interrupt **302**, finish processing any remaining data in the circular buffer, and record the value in the livetime counter **121**. The program then returns to the CAMAC Monitoring Task **382,** where the collected data can be unloaded.

The Data Acquisition Task **402** can also be interrupted by ASC Interrupt **410** at any time the ASC **23** output exceeds the input range to ADC **48,** forcing a branch to the Fix ADC Out of Range Condition **412** routine, as described below. Once correct ASC operation is restored, the program returns to processing data in the circular buffer.

### 4.3.2. Data Acquisition Task Software

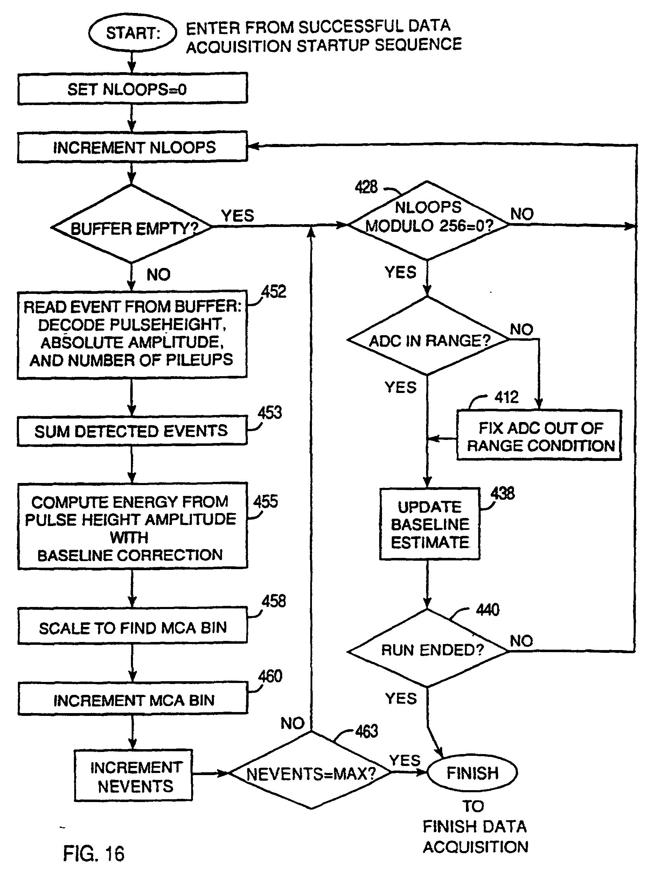

**FIG. 16** shows a flow chart of a specific embodiment of the Data Acquisition Task **402**. For the most part, this chart will be self explanatory to those skilled in control computer programming. Beyond general comments, our discussion will center on the steps which are unique to the invention spectrometer function. The program is essentially a loop which processes date from the circular buffer until it is halted either because test NEVENTS = MAX? **463** is true or until an appropriate value of RUNTASKS is found in the test RUN ENDED? **440.** Once every **256** times around the loop and independent test of the ADC condition is performed and a baseline estimate is collected from the slow filter to UPDATE BASELINE ESTIMATE **438**, which will be discussed further below. The number **256** is not critical and was selected so that the baseline would be updated often enough to track changing experimental conditions but not so often that it represents a substantial computation burden within the Data Acquisition Task **402.**

In the processing loop, once data from a good event have been read from the buffer **452,** the total number of events is incremented **453** using the value PLOUT **119.** Total counts can be divided by the recorded livetime to obtain a true Incoming Count Rate estimate. Statistics on PLOUT values can also be collected and used to monitor for incorrect experimental conditions such as excessive flux. The DSP then performs the computations and corrections, for distortions from the ASC **23** and otherwise, required to compute an accurate x-ray energy **455** from the captured slow filter values PKVAL **117** and UFVAL **118**. The algorithms selected must be appropriate for the detector-preamplifier combination to which the invention spectrometer is connected. This is an inventive step and will be described further below. Once the energy has been found, it can be scaled to compute a multichannel analysis (MCA) bin **458** and that bin incremented **460** to generate a histogram of the detected x-rays' spectrum using techniques well known to those skilled in the field.

## 4.4. Spectrometer Control and Computation Algorithms

Because the present invention digital spectrometer system comprises three linked modules: the ASC **23,** FiPPI **25** and DSP **27;** several novel algorithms are required to control them effectively. These will be described in the following sections.

## 4.4.1. Fixing ADC Out of RangeCondition

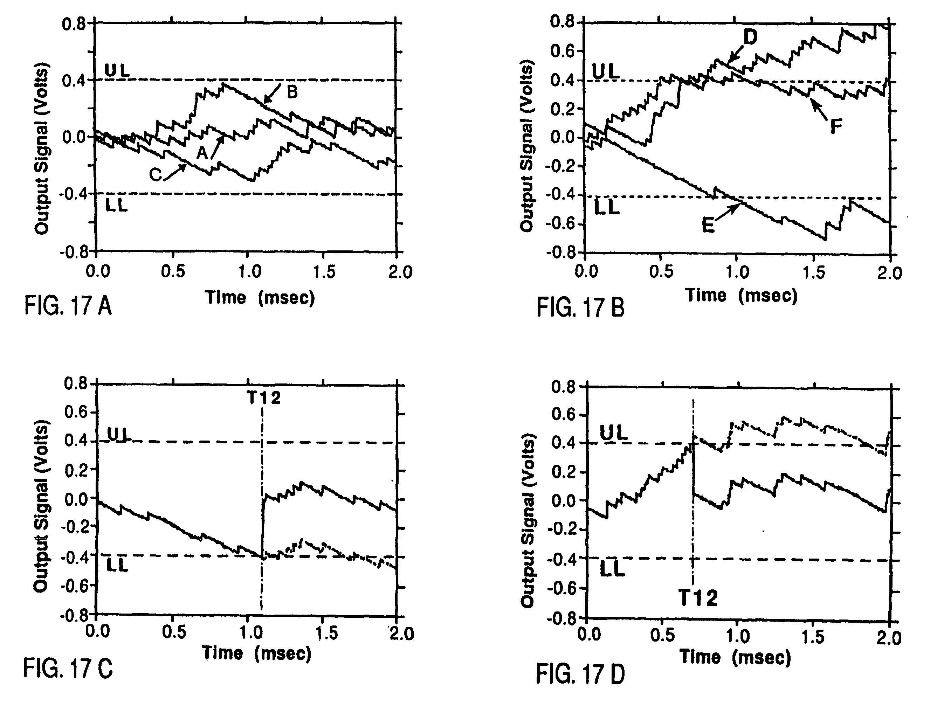

The essence of this problem is that fluctuations in input counting rate can cause the output of the ASC analog subsection **23,** which is the amplified difference between the preamplifier input and the LFF function generator **35**, to temporarily fall outside the input voltage range to ADC **48** (i.e., the range LL to UL in **FIG. 1E**). This is illustrated by **FIGS. 17A** and **17B. FIG. 17A** shows the most common cases, where temporarily high rate (trace B) or low rate (trace C) return to the average rate (trace A). Because x-ray arrivals are truly random, however, some small fraction of cases will appear as in **FIG. 17B**, where high (trace D) or low (trace E) arrival rates persist long enough to exceed the ADC's input range LL to UL. This invalidates the FiPPI's **25** data stream, requiring the **DSP 27** to take corrective action. It does so by adjusting the signals to LFF generator **35** control DACs **37** and **38** until the ASC's output signal returns to the ADC's input range. **FIGS. 17C** and **17D** show two examples where DAC **37** is adjusted. The types of fluctuations which are commonly encountered include preamplifier resets, cosmic ray events in the detector, and statistical fluctuations in the rate of arrival of x-rays to the detector.

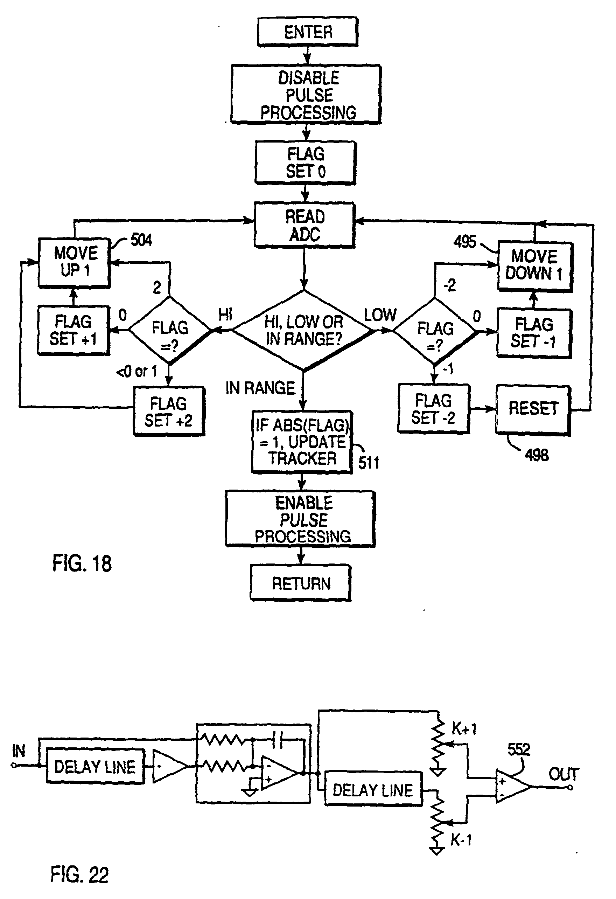

The algorithm shown in **FIG. 18** is designed to deal with these situations in a rapid and efficient manner and, in the preferred implementation, typically restores proper operation in less than about 2 μs. With the following few comments, this algorithm will be clear to those skilled in computer programming. The action boxes "Move Down 1" **495** and "Move Up 1" **504** refer to adjustments by DAC **37**, where a "unit" step is the number of DAC bits required to move half way across the ADC input range, as shown in **FIGS. 17C** and **17D**. The box "Reset" **49B** means that a preamplifier reset has been detected and requires the LFF generator **35** to be reset as well, using switch **75** and returning DAC **37** to its standard value. The box "If ABS(FLAG) = 1, Update Tracker" **511** means that a simple drift out of range was detected, as shown in **FIG. 17B,** and the slope tracking algorithm described in the next section should be invoked.

## 4.4.2. Updating the slope DAC 38 Setting Estimate

When Slope DAC **38** is set correctly, then, on average, out-of-range excursions should be equally likely in the Hi and Low directions. But if the incoming x-ray rate changes, then the Slope DAC will need to be adjusted. Therefore, each time the program calls the Fix ADC Out-of-Range Condition **412** routine it notes whether the excursion was in fact Hi or Low and determines whether the Slope DAC setting needs to be adjusted.

Thus, each time 'Update Tracker" **511** is called, a weight w is updated which, in the specific implementation, has an exponentially decaying memory of past Out-of-Range conditions, according to the formula

$$W_i = ((N-1)/N)W_{i-1} + V_i/N \tag{5}$$

where $V_i$ equals +1 for Hi and -1 for Low Out-of-Ranges. $W_i$ is then tested and, if it exceeds a test value V, it is zeroed and the Slope DAC **38** is adjusted by one bit in the appropriate direction. Otherwise nothing is done and the program moves on. Other equations, such as running averages, could be used to compute $\mathbf{W}_i$, but equation 5 is efficient in that require only minimal storage and computations.

## 4.4.3. Computing Energy From Pulse Height Amplitudes

## 4.4.3.1. Periodic Reset Preamplifier Case

Some computation is required to convert the FiPPI **25** output value PKVAL **117** to an x-ray energy without introducing systematic errors, primarily because the regions just before and just after the x-ray step in the ASC's **23** output are not flat, as in **FIG. 1B**, but are tilted, as in **FIG. 1E**. There are two contributions to this tilt for periodic reset preamplifier:.first, because the ASC **23** has subtracted off the ramp generated by the LFF generator **35;** second, because of leakage currents from either the detector or the preamplifier's first FET.

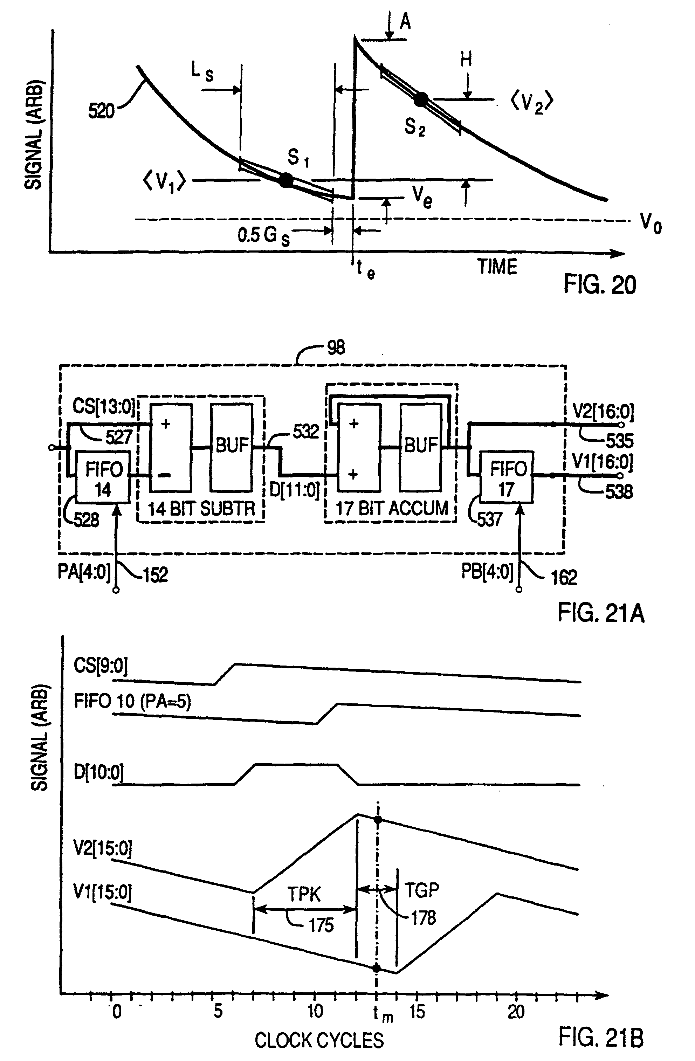

The PiPPI's **25** response to this sloped signal is indicated in **FIG. 19A** (for the PR preamplifier case). While the amplitude A is desired, the FiPPI produces the value H, which is the difference between the two shaded regions above and below the edge. Computation is therefore required to recover A from the measured value H. **FIG. 19A** shows that, for a slow filter length $L_S$ with a gap time of $G_s$:

$$H = V_2 - V_1 = A - S (L_S + G_S) \qquad (6)$$

where $V_1$ and $V_2$ are the average voltages over the shaded filter regions and S is the difference slope between the generated slope $S_9$ and the leakage slope $S_1$. Thus:

$$A = V_2 - V_1 = A - (S_g - S_1) (L_S + G_S) \qquad (7)$$

We thus wish to obtain a precise estimate of the second term, which would otherwise degrade the spectrometer's energy resolution. $L_s$ and $G_s$ are parameters and are known exactly, as is the generated slope $S_g$. $S_1$ must be measured, which can be done using measurements according to **Eqn. 7** when A equals 0, i.e., when no x-ray events are present anywhere within the filter. Now H equals $-(Sg - S_1)(L_S + G_S)$ and is the "baseline" between triangular pulses. By making many measurements, we can estimate the mean baseline value B to arbitrary precision:

$$B = <S_1(L_S + G_S)> = <PKVAL_B + S_g(L_S + G_S)> \qquad (8)$$

where $PKVAL_B$ are values of PKVAL **117** obtained from the FiPPI when the flag BKCOL **315** set to 1, as described earlier. Given B, we can compute an x-ray's energy from:

$$E = G(PKVAL_N + S_g(L_S + G_S) - B) \qquad (9)$$

where G is the system gain and these are normal values of PKVAL, i.e., with flag BKCOL **315** set to 0.

The baseline B must be determined with sufficient accuracy so that it does not affect the spectrometer's resolution. Since, in **Eqn. 9**, the variances $\sigma_P$ and $\sigma_B$ of PKVAL and B add in quadrature, $\sigma_B$ should thus be of order $1/10 \, \sigma_P$ and B should be determined from an average of approximately 100 measurements of $PKVAL_B$, assuming Gaussian distributed errors.

The determination of B in the preferred embodiment proceeds in two steps. First, in task no. 6 of the Start Data Acquisition Routine **395,** 100 measurements of $PKVAL_B$ are made and then their average B and variance $\sigma_B$ are computed. This provides an accurate starting value of B. Second, in Data Acquisition Task **402** (**FIG. 16**) B is updated once every 256 loops in procedure Update Baseline Estimate **438**. While various running averages of B could be computed, in the specific embodiment.

$$B_i = ((N-1)/N)B_{i-1} + b_i/N \qquad (10)$$

is implemented to provide an exponentially decaying past history, where $b_i$ is the currently measured value of $PKVAL_B + S_B (L_S + G_S)$. This is efficient because only the current value of B has to be stored and it can be carried out very rapidly on a fixed point DSP using shift instructions if the ratios are powers of 2. Experience shows that even fairly rapid changes in B can be accurately tracked by this technique. If B is expected to change very rapidly, the NLOOP Modulo 256 = 0 Test **428** value 256 can be reduced to sample the baseline more often.

#### 4.4.3.2. Continuous Discharge Preamplifier Case

For a CD preamplifier, the signals on both sides of the x-ray step event are decaying exponentials with different average slopes, as shown in **FIGS. 19B** and **20**. The situation is therefore more complex than for a PR preamplifier and requires a modified algorithm to replace **Eqn.9.** No changes in either spectrometer hardware or FiPPI firmware are required, however.

**FIG. 20** shows the situation. We desire amplitude A, but capture value H, the difference between the running averages $<V_2>$, captured $0.5(L_S + G_S)$ after the pulse, and $<V_1>$, captured $0.5(L_S + G_S)$ before the pulse. $S_2$ and $S_1$ are the signal slope at the two measurement points, $V_e$ its value at time $t_e$ instantaneously before the x-ray event, and $V_0$ the value to which it decays exponentially. We define the constant K by $K = (L_S + G_S>/2_T$, where $\tau$ is the preamplifier's exponential decay time.

The exponential decays are then:

$$V = V_0 + (V_e - V_0)\exp((t_e - t)/\tau)$$

For $t < t_e$, and

$$V = V_0 + (V_e + A - V_0)\exp(-(t - t_e)/\tau) \tag{11}$$

for $t > t_e$, and

$$S_1 = (V_e - V_0)\tau^{-1} \exp((L_S + G_S)/(2\tau)) = -(V_1 - V_0)\tau^{-1}$$

$$S_2 = (V_e + A - V_0)\tau^{-1} \exp(-(L_S + G_S)/(2\tau)) = -(V_2 - V_0)\tau^{-1}. \tag{12}$$

We can approximate H by:

$$H = A + (S_2 + S_1)(L_S + G_S)/2 = A + (S_2 + S_1)K\tau. \tag{13}$$

The slopes $S_1$ and $S_2$, to the same accuracy, are:

$$\tau S_1 = -(V_1 - V_0) = -(V_e - S_1\tau K - V_0), \text{ or}$$

$$S_1 = (V_e - V_0)/(\tau(1-K)) \text{ and:} \tag{14}$$

$$S_2 = -(V_e + A - V_0)/(\tau(1+K))$$

Substitution into **Eqn. 13** gives:

$$H = A/(1+K) - 2K(V_e - V_0)/[(1+K)(1-K)] \tag{15}$$

where neither $V_e$ nor $V_0$ is a measured variable. We can obtain an estimate for $V_e$ by measuring the instantaneous voltage at any point. For mathematical simplicity, we choose the point $V_2$, at time $(L_S + G_S)/2$, where:

$$V_2 = (V_e + A - S_2\tau K) = V_e + A - (V_e + A - V_0)K/(1+K), \tag{16}$$

so

$$V_e = (1+K)V_2 - A - KV_0. \tag{17}$$

Substituting into **Eqn. 15** gives:

$$A = H(1-K) + 2KV_2 - 2KV_0 \tag{18}$$

where H and $V_2$ are measured quantities and $V_0$ is nominally a constant. A can be scaled by the system gain G to obtain the x-ray energy just as in **Eqn. 9**. Estimates of $2KV_0$ can be obtained by measuring values of A when no x-ray is present. $2KV_0$ plays exactly the same role in computing A values in **Eqn. 18** as the baseline B does in **Eqn. 9** and the same algorithms can be used to accurately estimate its value. Any linear slope terms arising from detector leakage current will also fall into this term.

Implementing the CD preamplifier correction, is therefore implemented in the DSP's **27** code, with **Eqn. 9** being replaced by:

$$E = G[(1-K)PKVAL + 2K(UFVAL-<V_0>)] \qquad (19)$$

and the individual values of $V_0$ used to compute $<V_0>$ are found from

$$V_0 = [(1-K)PKVAL/(2K) - UFVAL]_{A=0}. \qquad (20)$$

### 4.4.3.3. Alternate Continuous Discharge Preamplifier Case

A noise analysis shows that, **Eqn. 19** suffers from excess noise when the value of K is not small (i.e., the filter time approaches the preamplifier decay time). This is both because the noise in PKVAL decreases as the filter length increases and because the weight K of the unfiltered term UFVAL increases. For a typical preamplifier decay time of 50 μs, resolutions at 4 μs filtering are only degraded a few percent, while at 20 μs noise will increase almost 90%.

The issue, then, is to get a statistically more accurate value of $V_2$ to use in **Eqn. 18**. By recognizing that $<V_2>$ is the most accurate measurement of $V_2$ we can make, and noting that H is just $<V_2>-<V_1>$, we can derive an alternative correction by substituting $S_2$ and $S_1$ from **Eqn. 12** into **Eqn. 13** for H, noting that $H = <V_2>-<V_1>$:

$$H = A - K(V_2+V_1) + 2KV_0 = <V_2> - <V_1> \qquad (21)$$

Replacing both $V_2$ and $V_1$ by their average filtered values $<V_2>$ and $<V_1>$, and rearranging gives:

$$A = <V_2>(K+1) - <V_1>(K-1) - 2KV_0 \qquad (22)$$

as a replacement for **Eqn. 18**, wherein all terms are now as statistically accurate as possible.

Implementing **Eqn. 22** requires a modified FiPPI slow filter design, as shown by the schematic and traces in **FIGS. 21A** and **21B,** which should be compared to **FIGS**. **7A** and **7B.** This circuit produces **the** running average $V_2$ and then uses a FIFO to produce **$V_1$,** which is just the same signal delayed appropriately. Since decimation by 4 bits will typically be required for the long shaping times of interest, the input signal CS[13:0] **527** is now 14 bits wide. The FIFO **528** length is set by the parameter PA[4:0] **152** which is $L_s$. D **532** has only 12 bits on the assumption that no x-ray pulse will exceed 1/8 of the ADC's input range; otherwise the number of bits in D and following stages may be increased. The delay between $V_2$ and $V_1$ is equal to $L_s+G_s$ and is set by parameter PB[4:0] **162** to FIFO **537**. $V_2$ and $V_1$ are captured in the output buffer 100 by the action of the Pile-up Checker **108** exactly as described above, with V2 [16:0] **535** output as PKVAL **117** and V1[16:0] **538** output as UFVAL **118**.

Because the FiPPI is implemented in a field programmable gate array (FPGA) in the preferred implementation, choosing between **Eqns. 18** and 22 does not physically change the spectrometer but only changes the FPGA's download file and the DSP's software.

Because **Eqns. 18** and **22** were derived based solely on the nature of decaying exponential curves and independently of the presented digital implementation, they can also be implemented by analog means. Thus, by DC coupling a CD preamplifier to an analog spectroscopy amplifier with triangular shaping and baseline correction and using the amplifier output as H in **Eqn. 18** and a time delayed copy of the amplifier input as $V_2$, then a signal is generated which is corrected for instantaneous baseline shifts resulting from the exponentially decaying signal, eliminating the need for pole-zero compensation which is required in AC coupled systems.

**Eqn. 22** can also be implemented using analog circuitry, as schematically indicated in **FIG. 22.** This circuit comprises a direct analog translation of the digital circuit shown in **FIG. 21A**, as will be clear to those skilled in the art of analog electronics, coupled to an op-amp summing circuit **552** to implement the sum of $V_2$ and $V_1$. The correction for $V_0$ would be supplied in practice by adding a baseline restoration circuit to the output of the circuit, as is well known to those skilled in the art. This circuit may offer substantial advantages over existing approaches when high input rates and short shaping times are desired, particularly within the time regimes where analog delay lines are easily implemented.

## 5. Conclusion

In conclusion it can be seen that the present invention provides a physically compact, low cost, high speed method and apparatus for processing the pulse signals from a detector-preamplifier system and providing a complete energy analysis of the radiation impinging on the detector. Combinatorial logic is used to perform a limited, but sufficient amount of processing at the sampling rate, while a programmed processor is used to carry out the more refined analysis at the event rate. This division of labor allows the invention to achieve high performance and low cost.

The above is a complete description of specific embodiments of the invention.

As a first example, while the specific embodiment employs a signal conditioning front end to reduce the number of ADC bits required, the operation of the rest of the invention is not dependent on this construction. If cheaper, faster ADCs with more bits became available this section might be eliminated. Further, while it is cost effective to use a single digital signal processor to implement the various computations required in the invention, these computations could be distributed between multiple microprocessors and, in certain applications this might be more effective (e.g., when higher total count rate capability is required).

**Claims**

1. A method for high speed digitally analyzing a noisy electronic signal containing step-like pulse events, which arrive at an average rate R, to estimate the amplitudes of at least some of said step-like pulses, wherein said electronic signal has been digitized with an analog-to-digital converter (ADC) (48), operating at a sampling frequency S which is greater than R, to produce a digital representation of the electronic signal, the representation being referred to as the digitized input signal, **characterized in that** said method comprises:

   providing hardwired digital combinatorial logic (25) coupled to said ADC and clocked at frequency S or a multiple thereof;
   providing digital processing means (27), referred to as the DSP, coupled to said combinatorial logic;
   using said combinatorial logic to:

      continuously apply one or more digital filters (98, 105) to said digitized input signal;
      detect the presence of events in the digitized input signal (107) ; and
      capture (100), for at least some of the detected events, output values from one or more of the digital filters;
      transferring said captured values from said combinatorial logic to the DSP; and
      using the DSP to form, at the captured event rate, estimates of said pulse amplitudes from said captured values and make one or more corrections as may be further required to achieve a certain accuracy.

2. The method of claim 1, and further comprising the step, carried out using said DSP, of binning the estimates to produce a spectral representation of the amplitudes of the detected pulses.

3. The method of claim 1, wherein said corrections made by said DSP include compensating the pulse amplitude estimates for errors resulting from applying the digital filters to waveforms which are not ideal steps.

4. The method of claim 3, wherein said compensation includes correcting the pulse amplitude estimates for manipulations of the electronic signal between its source and the input of the ADC.

5. The method of claim 4, wherein said manipulations include the step of conditioning the electronic signal according to a set of parameters whose values are controlled by said DSP.

6. The method of claim 5, and further comprising the steps of:

   sensing whether the input signal exceeds the input range of the ADC; and, if so, performing at least one of the following steps:

      signaling the DSP to avoid capturing possibly spurious filtered amplitude estimates; and
      signaling the DSP to adjust the set of parameters to return the input signal to the ADC's input range.

7. The method of claim 4, wherein said manipulations include the step of conditioning the electronic signal according to a set of parameters to reduce the dynamic range of the input signal.

8. The method of claim 7, wherein said conditioning step includes generating a signal comprising either an offset, whose value is set by one parameter, or a ramp, whose slope is set by a second parameter, or both, and subtracting said generated signal from the input signal.

9. The method of claim 7, wherein the DSP uses the values of the parameters in the set for correcting the pulse amplitude estimates.

10. The method of claim 3, wherein:

said step-like pulses in said input signal events have exponential decays between them; said combinatorial logic is also used to capture values describing said digitized input signal; said captured values include a value H and a value V2, wherein said value H is the difference between the two regions above and below a step in the digitized input signal captured by a trapezoidal filter, and said value V2 is an instantaneous value of the digitized input signal captured in the vicinity of the step in the digitised input signal; and said compensation includes the step of weighting V2 by a constant and adding it to H.

11. The method of claim 3, wherein:

said input signal consists of step-like pulses with exponential decays between them; said captured values include values V1 and V2 captured from a running average filter before and after a detected step-like event; and said compensation includes the step of forming a weighted difference of V1 and V2.

12. The method of claim 11, wherein said weighted difference A includes the terms $(K+1) V2- (K-1) V1$, where K is a constant that depends upon the exponential decay time and the parameters of the running average filter.

13. The method of claim 1, wherein said using said combinatorial logic to apply one or more digital filters to said digitized input signal includes the step of decimating the output of the ADC by N.

14. The method of claim 1, where one or more of said filters are digitally implemented trapezoidal filters.

15. The method of claim 1, and further including the steps of, performed during at least some time intervals when no events are detected, of:

capturing baseline values from one or more of said digital filters; transferring said captured baseline values from said combinatorial logic to said DSP; and

wherein said DSP estimating said amplitudes are based on said captured baseline values.

16. The method of claim 15, wherein said capturing baseline values further includes capturing one or more values of said digitized input signal.

17. The method of claims 15 and 16, wherein said DSP computes.one or more averages of said captured baseline values and estimates said amplitudes based on said one or more computed averages.

18. The method of claim 17, wherein the DSP controls said manipulation of the input signal between its source and the input of the ADC and corrects said captured baseline values for said manipulations prior to computing said one or more averages.

19. The method of claim 1, wherein said step of detecting said events includes filtering said digitized input signal with a short time constant trapezoidal or triangular filter and comparing the output of said filter to a threshold value.

20. The method of claim 1, wherein said combinatorial logic also implements pileup inspection by performing the following steps:

measuring times between successive events; and rejecting as piled up those events whose separation from either or both of their preceding and succeeding neighbor events does not exceed a predetermined pileup inspection period.

21. The method of claim 1, wherein said combinatorial logic also implements pileup inspection by performing the following steps:

measuring, at a threshold T, the width of a fast filter output pulse for each detected event; and
rejecting the event as piled up if said measured width exceeds a particular test value.

22. The method of claim 1, wherein said also implements pileup inspection combinatorial logicby performing the following steps:

measuring, at half its amplitude, the width of a fast filter output pulse for each detected event; and
rejecting the event as piled up if said measured width exceeds a particular test value.

23. The method of claim 1, where said combinatorial logic also counts all detected events for deadtime correction.

24. A high speed spectrometer apparatus (22) for digitally analyzing a noisy electronic signal containing step-like pulse events, which arrive at an average rate R, comprising means to estimate the amplitudes of at least some of said step-like pulses, and analog-to-digital converter means (ADC) 48), operating at a sampling frequency S which is greater than R, to produce a digital representation of said noisy electronic signal, said representation being referred to as the digitized input signal, **characterized in that** said apparatus comprises:

hardwired digital combinatorial logic means (25) coupled to said ADC and clocked at frequency S or a multiple thereof, said hardwired digital combinatorial logic including:

one or more digital filter means (98, 105) to receive and filter said digitized input signal;
means (107) to detect the presence of events in the digitized input signal;
means (100) to capture, for at least some of the detected events, output values from one or more of said digital filter means; and
digital signal processing means DSP (27), said DSP including:

means to couple to said combinatorial logic to receive said captured values;
means to compute, at the captured event rate, estimates of said pulse amplitudes from said captured values; and
means to make one or more corrections as may be further required to achieve a certain accuracy.

**Patentansprüche**

1. Eine Methode zur schnellen digitalen Analyse eines rauschbehafteten elektronischen Signals, das stufenförmige Pulsereignisse mit einer durchschnittlichen Rate R enthält, um die Amplitude von zumindest einiger dieser stufenförmiger Pulse zu bestimmen, wobei genanntes elektronische Signal durch einen Analog-Digital Wandler (ADC) digitalisiert wurde, der mit einer Abtastrate S grösser als R arbeitet, um eine digitale Darstellung des elektronischen Signals zu erzeugen - diese Darstellung wird im folgenden als digitalisiertes Eingangssignal bezeichnet - charakteristisch im Sinne, dass die Methode
festverdrahtete digitale kombinatorische Logik (25) enthält, verbunden mit genanntem ADC und getaktet mit einer Frequenz S oder einem Vielfachen von S;
digitale Verarbeitungseinheiten (27) enthält, im folgenden als DSP bezeichnet;
die kombinatorische Logik benutzt um:

kontinuierlich einen oder mehrere digitale Filter (98, 105) auf das genannte digitalisierte Eingangssignal anzuwenden;
das Vorkommen von Ereignissen im digitalisierten Eingangssignal zu finden (107); und
für zumindest einige der gefundenen Ereignisse Ausgabewerte von einem oder mehreren der digitalen Filter festzuhalten

obige festgehaltenen Ausgabewerte von der kombinatorischen Logik zum DSP übergibt; und
den DSP benutzt um - mit der Rate der gefundenen Ereignisse - Schätzwerte der genannten Pulsamplituden aus den festgehaltenen Werten zu bestimmen und falls nötig eine oder mehrere Korrekturen zu auszuführen um eine bestimmte Genauigkeit zu erreichen.

2. Die Methode aus Anspruch 1, mit dem zusätzlichen, im genannten DSP ausgeführten Schritt die Schätzwerte zu ordnen um eine spektrale Repräsentation der Amplituden der gefundenen Pulse zu erstellen.

3. Die Methode aus Anspruch 1, wobei die oben genannten Korrekturen des genannten DSPs beinhalten, die Schätzwerte der Pulsamplituden für Fehler zu kompensieren, die durch das Anwenden der digitalen Filter auf nicht ideal stufenförmige Wellenzüge verursacht werden.

4. Die Methode aus Anspruch 3, wobei die genannte Kompensation beinhaltet, die Schätzwerte der Pulsamplituden für Manipulationen des elektronischen Signals zwischen seiner Quelle und dem Eingang des ADC zu korrigieren.

5. Die Methode aus Anspruch 4, wobei die genannte Manipulation den Schritt beinhaltet, das elektronische Signal gemäß einer Gruppe von Parametern zu konditionieren, deren Werte durch den genannten DSP geregelt werden.

6. Die Methode aus Anspruch 5, mit den zusätzlichen Schritten,
Erkennen ob das Eingangssignal den Eingangsbereich des ADC übersteigt und gegebenenfalls mindestens einen der folgenden Schritten auszuführen:

dem DSP anzuzeigen um das Aufnehmen potentiell verfälschter gefilterter Schätzwerte der Amplituden zu vermeiden
dem DSP anzuzeigen um die Gruppe von Parametern anzupassen um das Eingangssignal in den Eingangsbereich des ADCs zurückzuführen

7. Die Methode aus Anspruch 4, wobei die genannte Manipulation den Schritt beinhaltet, das elektronische Signal gemäß einer Gruppe von Parametern zu konditionieren, um den dynamischen Bereich des Eingangssignals zu reduzieren.

8. Die Methode aus Anspruch 7, wobei der genannte Konditionierungsschritt beinhaltet, ein Signal zu erzeugen, das entweder aus einem Offset, dessen Wert durch einen Parameter bestimmt wird, oder aus einer Rampenfunktion, deren Steigung durch einen zweiten Parameter bestimmt wird, oder aus beiden besteht und dieses Signal von dem Eingangssignal zu subtrahieren.

9. Die Methode aus Anspruch 7, wobei der DSP die Parameterwerte benutzt um die Schätzwerte der Pulsamplituden zu korrigieren.

10. Die Methode aus Anspruch 3, wobei
die genannten stufenförmigen Pulse der genannten Eingangssignalereignisse exponentiell zwischen den Pulsen abklingen;
die genannte kombinatorische Logik auch zur Aufnahme von Werten, welche das genannte digitalisierte Eingangssignals beschreiben, benutzt wird;
die genannten aufgenommenen Werte einen Wert H, aufgenommen von einem Trapezfilter, und einen Wert V2, aufgenommen von dem digitalisierten Eingangssignal beinhalten, wobei der genannte Wert H die Differenz zwischen zwei Regionen oberhalb und unterhalb eines Schrittes des digitalisierten Eingangssignals, aufgenommen von einem Trapezfilter, ist, und V2 ein unmittelbarer Wert des digitalisierten Eingangssignals, aufgenommen in der näheren Umgebung des Schrittes des digitalisierten Eingangssignals, ist; und
die genannte Kompensation den Schritt beinhaltet, V2 mit einer Konstante zu gewichten und zu H zu addieren

11. Die Methode aus Anspruch 3, wobei
das genannte Eingangssignal aus stufenförmigen Pulsen mit exponentiellem Abklingen zwischen den Pulsen besteht;
die genannten aufgenommenen Werte die Werte V1 und V2 beinhalten, aufgenommen durch einen gleitenden-Mittelwert Filter vor und nach einem gefundenen stufenförmigen Ereignis; und
die Kompensation den Schritt beinhaltet, eine gewichtete Differenz von V1 und V2 zu bilden

12. Die Methode aus Anspruch 11, wobei die genannte gewichtete Differenz die Terme $(K+1) V_2$ und $(K-1) V_1$ beinhaltet, wobei K eine Konstante ist, die von der exponentiellen Abklingzeit und den Parametern des *gleitenden-Mittelwert* Filters abhängt.

**13.** Die Methode aus Anspruch 1, wobei die oben genannte Benutzung der kombinatorischen Logik zur Anwendung eines oder mehrerer digitaler Filter auf das genannte digitalisiertes Eingangssignal einen Schritt zur Dezimierung der ADC Ausgabe um N beinhaltet.

**14.** Die Methode aus Anspruch 1, wobei einer oder mehrere der genannten Filter digital implementierte Trapezfilter sind.

**15.** Die Methode aus Anspruch 1, mit den weiteren Schritten die zumindest während einiger der Zeitintervalle in welchen kein Ereignis gefunden wurde, ausgeführt werden, in welchen:

Grundlinienwerte von einem oder mehreren der genannten digitalen Filtern aufgenommen werden;
Die aufgenommenen Grundlinienwerte von der oben genannten kombinatorischen Logik dem oben genannten DSP übergeben werden;
Das oben genannte Bestimmen der Schätzwerte der Amplituden durch den DSP auf den genannten aufgenommenen Grundlinienwerten basiert.

**16.** Die Methode aus Anspruch 15, wobei Aufnehmen der Grundlinienwerte auch das Aufnehmen eines oder mehrerer Werte des genannten digitalisierten Eingangssignals einschließt.

**17.** Die Methode aus Anspruch 15 und 16, wobei der genannte DSP einen oder mehrere Mittelwerte der genanten aufgenommenen Grundlinienwerte berechnet und die Bestimmung der genannten Schätzwerte der Amplituden auf einem oder mehreren der genannten berechneten Mittelwerten basiert.

**18.** Die Methode aus Anspruch 17, wobei der DSP die genannte Manipulation des Eingangssignals zwischen seiner Quelle und dem Eingang des ADC regelt und die genannten aufgenommenen Grundlinienwerte vor der Berechnung des genannten einen Mittelwertes oder der genannten mehreren Mittelwerte für die genannten Manipulationen korrigiert.

**19.** Die Methode aus Anspruch 1, wobei der genannte Schritt zum Finden der erwähnten Ereignisse beinhaltet, das genannte digitalisierte Eingangssignal mit einem Trapez- oder Dreieckfilter mit kurzer Zeitkonstante zu filtern und die Ausgabe dieses Filters mit einem Schwellenwert zu vergleichen.

**20.** Die Methode aus Anspruch 1, wobei die genannte kombinatorische Logik mittels der folgenden Schritte auch Doppelpulserkennung durchführt:

die Zeit zwischen aufeinander folgenden Ereignissen zu messen; und
solche Ereignisse als Doppelpulse zu verwerfen, deren Trennung von dem vorhergehenden oder nachfolgenden Ereignis, oder beiden solcher Ereignisse, einen voreingestellten Wert nicht überschreitet.

**21.** Die Methode aus Anspruch 1, wobei die genannte kombinatorische Logik mittels der folgenden Schritte auch Doppelpulserkennung durchführt:

die Breite des Ausgabepulses des schnellen Filters bei einem Schwellenwert T für jedes gefundene Ereignis zu messen; und
das Ereignis als Doppelpuls zu verwerfen falls der genannte Messwert einen bestimmten Testwert übersteigt.

**22.** Die Methode aus Anspruch 1, wobei die genannte kombinatorische Logik mittels der folgenden Schritte auch Doppelpulserkennung durchführt:

die Breite des Ausgabepulses des schnellen Filters bei der Hälfte der Pulsamplitude für jedes gefundene Ereignis zu messen; und
das Ereignis als Doppelpuls zu verwerfen falls der genannte Messwert einen bestimmten Testwert übersteigt

**23.** Die Methode aus Anspruch 1, wobei die kombinatorische Logik auch alle gefundenen Ereignisse für eine Korrektur der Totzeit zählt.

**24.** Ein schnelles Spektrometergerät (22) zur digitalen Analyse eines rauschbehafteten elektronischen Signals, das stufenförmige Pulsereignisse mit einer durchschnittlichen Rate R enthält, welches Mittel beinhaltet um die Amplituden zumindest einiger der genannten stufenförmige Pulse zu schätzen und welches Mittel zur Analog-Digital Wandlung (ADC) beinhaltet, die mit einer Abtastrate S größer als R arbeiten um eine digitale Darstellung des genannten rauschbehafteten elektronischen Signals zu erzeugen - diese Darstellung wird im folgenden als digitalisiertes Eingangssignal bezeichnet - charakteristisch im Sinne dass das Gerät

festverdrahtete digitale kombinatorische Logik (25) enthält, verbunden mit oben genanntem ADC und getaktet mit einer Frequenz S oder einem Vielfachen von S; und beinhaltend

einen oder mehrere digitale Filter (98, 105) um das genannte digitalisierte Eingangssignal aufzunehmen und zu filtern

Mittel (107) um das Vorkommen von Ereignissen im digitalisierten Eingangssignal zu finden

Mittel (100) um für zumindest einige der gefundenen Ereignisse Ausgabewerte von einem oder mehreren der digitalen Filter festzuhalten

Mittel zur digitalen Signalverarbeitung DSP (27) enthält, der genannte DSP beinhaltend

Mittel zur Verbindung zur genannten kombinatorischen Logik um die genannten festgehaltenen Werte aufzunehmen,

Mittel zur Berechnung von Schätzwerten der genannten Pulsamplitude aus den genannten festgehaltenen Werten mit der Rate der gefundenen Ereignisse, und

Mittel um eine oder mehrere Korrekturen auszuführen um eine bestimmte Genauigkeit zu erreichen.

### Revendications

**1.** Une méthode pour l'analyse numérique très rapide d'un signal électronique bruyant contenant des événements de type échelon qui se produisent à un taux de comptage moyen R, pour estimer les amplitudes d'au moins quelques desdits signaux de type échelon, où ledit signal électronique a été numérisé par un convertisseur analogique numérique (ADC) (48), opérant à une fréquence d'échantillonnage S qui est supérieure à R, afin de produire une représentation numérique de ce signal électronique, cette représentation étant référencé comme le signal d'entrée numérisé, **caractérisé par** ladite méthode, comprend:

mettre à disposition une logique combinatoire numérique câblée (25) couplé audit ADC et cadencé à fréquence S ou à un de ses multiples ;

mettre à disposition des moyens de traitements numériques (27), référencé comme le DSP, couplé à ladite logique combinatoire ;

utilisant ladite logique combinatoire afin de :

appliquer d'une façon continue un ou plusieurs filtres numériques (98, 105) audit signal d'entrée numérisé ;

détecter la présence d'événements dans le signal d'entré numérisé (107) ; et

capturer (100), pour au moins quelques des évènements détectés, des valeurs de sortie pour un ou plus des filtres numériques ;

transférer lesdites valeurs capturées depuis ladite logique combinatoire vers le DSP ; et

utiliser le DSP pour former, au taux d'événements capturés, des estimations desdites amplitudes de signaux depuis lesdites valeurs capturées et faire une ou plusieurs corrections pouvant être plus tard requises pour obtenir une certaine exactitude.

**2.** La méthode de la revendication 1, ainsi que l'étape, effectuée par ledit DSP, de rendre en binaire les estimations pour produire une représentation spectrale des amplitudes des signaux détectés.

**3.** La méthode de la revendication 1, où lesdites corrections effectuées par ledit DSP incluent la compensation des estimations d'amplitude du signal pour des erreurs résultants de l'utilisation de filtres numériques sur des signaux qui ne sont pas des échelons idéaux.

4. La méthode de la revendication 3, où ladite compensation inclut la correction des estimations pour l'amplitude du signal pour la manipulation du signal électronique entre sa source et l'entrée de l'ADC.

5. La méthode de la revendication 4, ou lesdites manipulations incluent l'étape de conditionnement du signal électronique en accord avec un jeu de paramètres dont les valeurs sont contrôlées par ledit DSP.

6. La méthode de la revendication 5, et les étapes supplémentaires de:

vérifier si le signal d'entrée excède la gamme d'entrée de l'ADC ; et, si le cas est, d'exécuter au moins une des étapes suivantes :

signaler au DSP d'empêcher la capture de possibles estimations d'amplitude mal filtrées ; et

signaler au DSP d'ajuster le jeu de paramètres à retourner au signal d'entrée pour la gamme d'entrée de l'ADC.

7. La méthode de la revendication 4, où lesdites manipulations incluent l'étape de conditionnement du signal électronique en accord avec un jeu de paramètres pour réduire la gamme dynamique de signal d'entrée.

8. La méthode de la revendication 7, où ladite étape de conditionnement inclut la génération d'un signal comprenant soit un excentrage (offset), dont la valeur est sélectionnée par un paramètre, soit une rampe, dont la pente est sélectionnée par un second paramètre, soit par les deux, et la soustraction dudit signal généré du signal d'entrée.

9. La méthode de la revendication 7, où le DSP utilise les valeurs des paramètres dans le jeu de paramètres pour corriger les estimations d'amplitude du signal.

10. La méthode de la revendication 3, où :

lesdits évènements de type échelon dans ledit signal d'entrée ont une relaxation exponentielle entre eux ;

ladite logique combinatoire est utilisée pour la capture des valeurs dudit signal d'entrée numérisé.

lesdites valeurs capturées incluent une valeur H et une valeur V2, où ladite valeur H est la différence entre les deux régions au dessous et au dessus d'un échelon dans le signal d'entrée numérisé capturée par un filtre trapézoïdal et ladite valeur V2 est une valeur instantanée du signal d'entrée numérisé capturée a proximité de l'échelon dans le signal d'entrée numérisé; et

ladite compensation inclut l'étape de pondération de V2 par une constante et son addition a H.

11. La méthode de la revendication 3, où :

ledit signal d'entrée consiste de signaux de type échelon avec une relaxation exponentielle entre eux ;

lesdites valeurs capturées incluent les valeurs V1 et V2 capturées depuis un filtre de moyenne continu avant et après un évènement de type échelon détecté ; et

ladite compensation inclut l'étape de formation de la différence pondérée de V1 et V2.

12. La méthode de la revendication 11, où ladite différence pondérée A inclut les termes $(K+1)V2-(K-1)V1$, où K est une constante qui dépend du temps de relaxation et des paramètres du filtre de moyenne continu.

13. La méthode de la revendication 1, où ladite utilisation de ladite logique combinatoire pour appliquer un ou plus filtres digitaux audit signal d'entrée numérisé, inclut l'étape de décimation de la sortie de l'ADC par N.

14. La méthode de la revendication 1, où un ou plusieurs desdits filtres sont implémentés d'une façon numérique comme filtres trapézoïdaux.

15. La méthode de la revendication 1, ainsi que les étapes suivantes, effectuées pendant au moins un intervalle de temps quand aucun événement n'est détecté de:

capturer des valeur du signal de base (baseline) depuis un ou plusieurs desdits filtres numériques ;

transférer lesdites valeurs capturées du signal de base depuis ladite logique combinatoire vers ledit DSP ; et lesdites estimations desdites amplitudes par le DSP sont basées sur lesdites valeurs capturées du signal de base.

16. La méthode de la revendication 15, où ladite capture de valeurs du signal de base inclut la capture d'une ou plusieurs valeurs dudit signal d'entrée numérisé.

17. La méthode de la revendication 15 et 16, où ledit DSP calcule une moyenne ou plus desdites valeurs du signal de base capturé et estime lesdites amplitudes base sur ladite ou lesdites moyennes calculées.

18. La méthode de la revendication 17, où le DSP contrôle ladite manipulation du signal d'entrée entre sa source et l'entrée de l'ADC et corrige lesdites valeurs du signal de base capturés pour lesdites manipulations avant calcul de ladite ou desdites moyennes.

19. La méthode de la revendication 1, où ladite étape de détection desdits évènements inclus le filtrage dudit signal d'entrée numérisé par un filtre trapézoïdal ou triangulaire de petite constante de temps et la comparaison de la sortie dudit filtre avec une valeur de seuil.

20. La méthode de la revendication 1, où ladite logique combinatoire implémente aussi l'inspection d'évènements empilés (pileup) en effectuant les étapes suivantes :

mesurer le temps entre événements successifs ; et

rejeter les évènements empilés dont la séparation d'un ou des deux événements voisins précédent et suivant n'excède pas une période d'inspection d'événements empilés prédéterminée.

21. La méthode de la revendication 1, où ladite logique combinatoire implémente aussi l'inspection d'évènements empilés en effectuant les étapes suivantes :

mesurer, à un seuil T, la largeur d'un signal de sortie d'un filtre rapide pour chaque évènement détecté ; et

rejeter l'évènement empilé si ladite mesure de largeur excède une valeur particulière de test

22. La méthode de la revendication 1, où ladite logique combinatoire implémente aussi l'inspection d'évènements empiles en effectuant les étapes suivantes :

mesurer, à la moitie de son amplitude, la largeur du signal de sortie du filtre rapide pour chaque évènement détecté ; et

rejeter l'événement empilé si ladite mesure de largeur excède une valeur particulière de test.

23. La méthode de la revendication 1, où la logique combinatoire compte aussi tous les évènements détectés pour les corrections des temps mort.

24. Un appareil de spectrométrie très rapide (22) pour l'analyse numérique d'un signal électronique bruyant contenant des évènements de type échelon, qui se produisent à un taux moyen R, comprenant des moyens d'estimer les amplitudes d'au moins quelques signaux de type échelon, et des moyens de conversion analogique vers numérique (ADC) (48), opérant a une fréquence d'échantillonnage S supérieure à R, afin de produire une représentation numérique dudit signal électronique bruyant, ladite représentation étant référencée comme le signal d'entrée numérisé, **caractérisé** dans ledit appareil comprend:

des moyens de logique combinatoire numérique câblée (25), couplé audit ADC et cadencé à fréquence S ou à un de ses multiples, ladite logique combinatoire câblée incluant :

un ou plusieurs moyens de filtrage numérique (98,105) pour recevoir et filtrer ladite entrée numérique du signal ;des moyens de détecter (107) la présence d'évènements dans le signal d'entrée numérisé ;

des moyens de capturer (100), pour au moins quelques évènements détectés, des valeurs de sortie depuis un ou plusieurs desdits moyens de filtrage digitaux ; et

des moyens de traitement numérique du signal DSP (27), ledit DSP incluant :

des moyens de coupler ladite logique combinatoire pour recevoir lesdites valeurs capturées ;

des moyens de calcul, au taux d'évènements capturés, des estimations desdites amplitudes depuis les valeurs capturées ; et

des moyens de faire une ou plusieurs corrections pouvant être plus tard requises pour obtenir une certaine exactitude.

FIG. 1A
(PRIOR ART)

FIG. 1B

FIG. 1C

FIG. 1D

FIG. 1E

EP 0 880 821 B1

FIG. 2

| 20 | 23 | 25 | 27 | 28 |
|---|---|---|---|---|
| DETECTOR & PREAMP | ANALOG SIGNAL CONDITIONING AND A TO D CONVERSION | HARDWIRED DIGITAL FILTERS, PEAK DETECTOR, & PILEUP INSPECTOR | PROGRAMMABLE DIGITAL COMPUTER: (SIGNAL REFINEMENT, MCA, ASC CONTROL, & I/O FUNCTIONS) | GENERAL PURPOSE CONTROL COMPUTER & INTERFACE |

22

23

28 — ANALOG SUBSECTION

INTERUPT

DIGITAL SUBSECTION

IN

SUBTRACTOR

30

33

42

44 COMPARATOR

45

47 LOW PASS FILTER

48

A TO D CONVERTER

50 ADCBUS

D TO A    43

D TO A    32

BUS BUFFERS    52

DSPBUS

53

35 LFF GENERATOR

D TO A    37

ADDR'S

54

D TO A    38

40 RESET

FIG. 3

FIG. 4

EP 0 880 821 B1

FIG. 5

FIG. 7A

FIG. 7B

FIG. 6A

FIG. 6B

EP 0 880 821 B1

FIG. 8A

FIG. 8B

FIG. 19A    FIG. 19B

FIG. 9A

FIG. 9B

FIG. 9C

FIG. 9D

FIG. 9E

FIG. 9F

FIG. 9G

TIME STEPS

FIG. 10A

FIG. 10B

FIG. 11A

EP 0 880 821 B1

FIG. 11B

## FIG. 12A

**SFP_CNT**

4 BIT COUNTER WITH RESET AND CLOCK ENABLE

CE21, R21, Q21, CLK

SFP 228

TC9

Q10[0] 270

PL[3:0]

D22 CE22 Q22 CLK 4 BIT BUFFER

NSFP[3:0] 340

110

## FIG. 12B

CLK

SFP

TC9

Q10[0]

PL[3:0] — 0, 1, 2, 3, 0, 1

PLOUT[3:0] — X, 3

## FIG. 13

121

CLK 128

DIVIDE BY N (200) 370

COUNTER 25 WITH ENABLE AND RESET

CE25 R25 Q25

122 TIME

C_RESET

373 C_ENABLE

FIG. 14A

FIG. 14B

FIG. 15

EP 0 880 821 B1

START: ENTER FROM SUCCESSFUL DATA ACQUISITION STARTUP SEQUENCE

SET NLOOPS=0

INCREMENT NLOOPS

BUFFER EMPTY?
YES
NO

428
NLOOPS MODULO 256=0?
NO
YES

452
READ EVENT FROM BUFFER: DECODE PULSEHEIGHT, ABSOLUTE AMPLITUDE, AND NUMBER OF PILEUPS

ADC IN RANGE?
NO
YES

412
FIX ADC OUT OF RANGE CONDITION

453
SUM DETECTED EVENTS

455
COMPUTE ENERGY FROM PULSE HEIGHT AMPLITUDE WITH BASELINE CORRECTION

438
UPDATE BASELINE ESTIMATE

458
SCALE TO FIND MCA BIN

440
RUN ENDED?
NO
YES

460
INCREMENT MCA BIN

INCREMENT NEVENTS

NO
463
NEVENTS=MAX?
YES
FINISH

TO FINISH DATA ACQUISITION

FIG. 16

43

FIG. 17 A

FIG. 17 B

FIG. 17 C

FIG. 17 D

EP 0 880 821 B1

ENTER

DISABLE PULSE PROCESSING

FLAG SET 0

READ ADC

MOVE UP 1    504

FLAG SET +1    0

FLAG =?    2    HI

HI, LOW OR IN RANGE?    LOW

FLAG =?    -2    495    MOVE DOWN 1

0    FLAG SET -1

<0 or 1

FLAG SET +2

IN RANGE

-1    FLAG SET -2    RESET    498

IF ABS(FLAG) = 1, UPDATE TRACKER    511

ENABLE PULSE PROCESSING

**FIG. 18**

RETURN

**FIG. 22**

IN    DELAY LINE    DELAY LINE    K+1    552    OUT    K-1

FIG. 20

FIG. 21A

FIG. 21B